(19) Europäisches Patentamt
European Patent Office
Office européen des brevets

(11) EP 4 353 752 A1

(12) **EUROPEAN PATENT APPLICATION**
published in accordance with Art. 153(4) EPC

(43) Date of publication:
**17.04.2024 Bulletin 2024/16**

(21) Application number: **22820316.2**

(22) Date of filing: **09.06.2022**

(51) International Patent Classification (IPC):
***C08F 2/24*** ***(2006.01)*** ***C08F 214/22*** ***(2006.01)***
***C08F 216/14*** ***(2006.01)***

(52) Cooperative Patent Classification (CPC):
**C08F 2/24; C08F 214/22; C08F 216/14**

(86) International application number:
**PCT/JP2022/023335**

(87) International publication number:
**WO 2022/260137 (15.12.2022 Gazette 2022/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.06.2021 JP 2021097830**

(71) Applicant: **Daikin Industries, Ltd.**
**Osaka-shi, Osaka 530-0001 (JP)**

(72) Inventors:
- **YUASA, Sota**
  **Osaka-shi, Osaka 530-0001 (JP)**
- **MORIKAWA, Tatsuya**
  **Osaka-shi, Osaka 530-0001 (JP)**
- **TAMAI, Rina**
  **Osaka-shi, Osaka 530-0001 (JP)**
- **TAKEMURA, Kouhei**
  **Osaka-shi, Osaka 530-0001 (JP)**
- **IRIE, Masaki**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) METHOD FOR PRODUCING AQUEOUS DISPERSION OF FLUORINE-CONTAINING ELASTOMER

(57) Provided is a method for producing an aqueous dispersion of a fluorine-containing elastomer, comprising polymerizing a fluorine-containing monomer in the presence of an aqueous medium and a fluorine-containing compound (A), to produce an aqueous dispersion containing a fluorine-containing elastomer, wherein the fluorine-containing elastomer contains a methylene group in a main chain, the fluorine-containing compound (A) is a compound represented by general formula (A):

$$CX^iX^k=CX^jR^a-(CZ^1Z^2)_k-Y^3 \qquad (A)$$

wherein $X^i$, $X^j$, and $X^k$ are the same or different and are F, Cl, H, or $CF_3$; $Y^3$ is a hydrophilic group; $R^a$ is a linking group; $Z^1$ and $Z^2$ are the same or different and are H, F, or $CF_3$; and k is 0 or 1; provided that at least one of $X^i$, $X^k$, $X^j$, $R^a$, $Z^1$, and $Z^2$ comprises F; and the number of carbon atoms in a portion excluding the hydrophilic group is 6 or less, and the fluorine-containing compound (A) is fed after polymerization of the fluorine-containing monomer is initiated.

EP 4 353 752 A1

## Description

### TECHNICAL FIELD

The present disclosure relates to a method for producing an aqueous dispersion of a fluorine-containing elastomer.

### BACKGROUND ART

As a method for producing an aqueous dispersion of a fluorine-containing elastomer, Patent Document 1 describes emulsion polymerization in which a reactive surfactant composed of a compound having a radical polymerizable unsaturated bond and a hydrophilic group within the molecule is used as a surfactant.

### RELATED ART

### PATENT DOCUMENT

Patent Document 1: JP 2007-045970 A

### SUMMARY OF THE INVENTION

### PROBLEM TO BE SOLVED BY THE INVENTION

An object of the present disclosure is to provide a production method in which polymerization of a fluorine-containing monomer can be made to progress smoothly while suppressing adhesion of a fluorine-containing elastomer to a polymerization tank without using a relatively large amount of a reactive surfactant as in conventional production methods.

### MEANS FOR SOLVING THE PROBLEM

The present disclosure provides a method for producing an aqueous dispersion of a fluorine-containing elastomer, comprising polymerizing a fluorine-containing monomer in the presence of an aqueous medium and a fluorine-containing compound (A), to produce an aqueous dispersion containing a fluorine-containing elastomer, wherein the fluorine-containing elastomer contains a methylene group in a main chain, the fluorine-containing compound (A) is a compound represented by general formula (A):

$$CX^iX^k=CX^jR^a-(CZ^1Z^2)_k-Y^3 \qquad (A)$$

wherein $X^i$, $X^j$, and $X^k$ are the same or different and are F, Cl, H, or $CF_3$; $Y^3$ is a hydrophilic group; $R^a$ is a linking group; $Z^1$ and $Z^2$ are the same or different and are H, F, or $CF_3$; and k is 0 or 1; provided that at least one of $X^i$, $X^k$, $X^j$, $R^a$, $Z^1$, and $Z^2$ comprises F; and the number of carbon atoms in a portion excluding the hydrophilic group is 6 or less, and the fluorine-containing compound (A) is fed after polymerization of the fluorine-containing monomer is initiated.

The hydrophilic group is preferably $-NH_2$, $-P(O)(OM)_2$, $-OP(O)(OM)_2$, $-SO_3M$, $-OSO_3M$, or -COOM, wherein M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring).

The fluorine-containing elastomer preferably contains vinylidene fluoride unit.

The fluorine-containing elastomer preferably contains 50 mol% or more of vinylidene fluoride unit based on all monomer units.

The fluorine-containing compound (A) is preferably also fed before the initiation of polymerization of the fluorine-containing monomer.

A feed amount of the fluorine-containing compound (A) that is fed after the polymerization of the fluorine-containing monomer is initiated is preferably 30 to 300 mass ppm based on the aqueous medium.

The fluorine-containing monomer is preferably polymerized substantially in the absence of a fluorine-containing surfactant not having a radical polymerizable unsaturated bond.

The fluorine-containing elastomer preferably has a Mooney viscosity (ML1 + 10 (100°C)) of 10 to 130.

The fluorine-containing compound (A) is preferably at least one selected from the group consisting of a compound represented by general formula (A1):

$CX^iX^k=CX^j-O-R-(CZ^1Z^2)_k-Y^3$

wherein $X^i$, $X^j$, $X^k$, $Z^1$, $Z^2$, k, and $Y^3$ are as described above; R is a fluorinated alkylene group or fluorinated oxyalkylene group having 1 to 3 carbon atoms; and a compound represented by general formula (A2):
$CX^iX^k=CX^j-CZ^1Z^2-O-R-(CZ^1Z^2)_k-Y^3$ wherein $X^i$, $X^j$, $X^k$, $Z^1$, $Z^2$, k, and $Y^3$ are as described above; R is a fluorinated alkylene group or fluorinated oxyalkylene group having 1 or 2 carbon atoms.

EFFECT OF INVENTION

According to the present disclosure, it is possible to provide a production method in which polymerization of a fluorine-containing monomer can be made to progress smoothly while suppressing adhesion of a fluorine-containing elastomer to a polymerization tank without using a relatively large amount of a reactive surfactant as in conventional production methods.

DESCRIPTION OF EMBODIMENTS

Before describing specific embodiments of the present disclosure, some terms used herein are defined or explained.

Herein, the fluorine-containing elastomer is an amorphous fluoropolymer. Being "amorphous" means that the size of a melting peak ($\Delta H$) appearing in differential scanning calorimetry (DSC) (temperature-increasing rate 10°C/min) or differential thermal analysis (DTA) (temperature-increasing rate 10°C/min) of the fluoropolymer is 4.5 J/g or less. The fluorine-containing elastomer exhibits elastomeric characteristics by being crosslinked. Elastomeric characteristics mean such characteristics that the polymer can be stretched, and retain its original length when the force required to stretch the polymer is no longer applied.

Herein, the perfluoromonomer is a monomer that does not contain a carbon atom-hydrogen atom bond within the molecule. In addition to carbon atoms and fluorine atoms, the perfluoromonomer may a monomer in which some fluorine atoms bonded to carbon atoms are replaced with chlorine atoms, or may be a monomer having a nitrogen atom, an oxygen atom, a sulfur atom, a phosphorus atom, a boron atom, or a silicon atom in addition to carbon atoms. The perfluoromonomer is preferably a monomer in which all hydrogen atoms are replaced with fluorine atoms. The perfluoromonomer does not include a monomer that provides a crosslinkable group.

The monomer that provides a crosslinking site is a monomer (a cure site monomer) that provides a fluoropolymer with a crosslinking site for forming a crosslink by a curing agent. The monomer that provides a crosslinking site includes a monomer that provides a crosslinkable group.

Herein, the contents of the respective monomer units constituting the fluorine-containing elastomer can be calculated by a suitable combination of NMR, FT-IR, elemental analysis, and X-ray fluorescence analysis in accordance with the types of the monomers.

Herein, the term "organic group" means a group containing one or more carbon atoms or a group formed by removing one hydrogen atom from an organic compound. Examples of the "organic group" include:

an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents, a cyano group,
a formyl group,
RaO-,
RaCO-,
$RaSO_2$-,
RaCOO-,
RaNRaCO-,
RaCONRa-,
RaOCO-,

$RaOSO_2$-, and
$RaNRbSO_2$-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples

of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group each may have an aliphatic group, an aliphatic oxy group, a halogen atom, a carbamoyl group, a heterocyclic group ring-fused with the aryl group, and an aliphatic oxycarbonyl group, preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

The phrase "at least one" as used herein includes all numerical values greater than or equal to 1 (for example, at least 2, at least 4, at least 6, at least 8, at least 10, at least 25, at least 50, at least 100, and the like).

Hereinafter, specific embodiments of the present disclosure will now be described in detail, but the present disclosure is not limited to the following embodiments.

In a production method of the present disclosure, a fluorine-containing monomer is polymerized in the presence of an aqueous medium, whereby, when producing an aqueous dispersion containing a fluorine-containing elastomer, a

fluorine-containing compound (A) represented by general formula (A) is fed to a polymerization system after the polymerization of the fluorine-containing monomer is initiated.

General formula (A):

$$CX^iX^k=CX^jR^a-(CZ^1Z^2)_k-Y^3 \qquad (A)$$

wherein $X^i$, $X^j$, and $X^k$ are the same or different and are F, Cl, H, or $CF_3$; $Y^3$ is a hydrophilic group; $R^a$ is a linking group; $Z^1$ and $Z^2$ are the same or different and are H, F, or $CF_3$; and k is 0 or 1; provided that at least one of $X^i$, $X^k$, $X^j$, $R^a$, $Z^1$, and $Z^2$ comprises F; and the number of carbon atoms in a portion excluding the hydrophilic group is 6 or less.

The feeding of the fluorine-containing compound (A) to the polymerization system after the initiation of polymerization makes it possible to suppress adhesion of the fluorine-containing elastomer generated by a polymerization reaction to a polymerization tank even when the feed amount of the fluorine-containing compound (A) is a relatively small amount and also makes it possible to make the polymerization reaction of the fluorine-containing monomer progress smoothly and to produce a sufficient number of fluorine-containing elastomer particles.

The fluorine-containing compound (A) as used in the production method of the present disclosure has a characteristic structure in which the number of carbon atoms in a portion excluding the hydrophilic group ($Y^3$) is 6 or less and a portion corresponding to the hydrophilic group within the molecule is a short chain. When the number of carbon atoms in the portion excluding the hydrophilic group ($Y^3$) exceeds 6, there is a need to use a relatively large amount of a compound to suppress adhesion of the fluorine-containing elastomer to the polymerization tank, which is economically disadvantageous, and post-processing becomes complicated, which is also disadvantageous.

The number of carbon atoms in the portion excluding the hydrophilic group ($Y^3$) of the fluorine-containing compound (A) is preferably 3 or more, more preferably 4 or more, and even more preferably 5 or more because the polymerization of the fluorine-containing monomer can be made to progress more smoothly while further suppressing adhesion of the fluorine-containing elastomer to the polymerization tank.

The hydrophilic group ($Y^3$) of the fluorine-containing compound (A) needs to be a group exhibiting hydrophilicity and may be an anionic hydrophilic group, a cationic hydrophilic group or a nonionic hydrophilic group, but is preferably an anionic hydrophilic group.

Examples of the hydrophilic group ($Y^3$) in the fluorine-containing compound (A) include $-NH_2$, $-P(O)(OM)_2$, $-OP(O)(OM)_2$, $-SO_3M$, $-OSO_3M$, and -COOM, wherein M is H, a metal atom, $NR^7_4$, optionally substituted imidazolium, optionally substituted pyridinium, or optionally substituted phosphonium; and $R^7$ is H or an organic group and are the same as or different from one another, and any two are optionally bonded to each other to form a ring. In particular, the hydrophilic group is preferably $-SO_3M$ or -COOM, and more preferably -COOM. The organic group of $R^7$ is preferably an alkyl group. $R^7$ is preferably H or a $C_{1-10}$ organic group, more preferably H or a $C_{1-4}$ organic group, even more preferably H or a $C_{1-4}$ alkyl group, and most preferably H. Examples of the metal atom include monovalent or divalent metal atoms, an alkali metal (Group 1) or an alkaline earth metal (Group 2) is preferable, and Na, K, or Li is more preferable.

$R^a$ in general formula (A) is a linking group. The "linking group" as used herein refers to a divalent linking group. The linking group is preferably a single bond or a group containing at least one carbon atom. The number of carbon atoms in the linking group is selected so that the number of carbon atoms in the portion excluding the hydrophilic group of the fluorine-containing compound (A) becomes 6 or less.

The linking group may be linear or branched, cyclic or acyclic, saturated or unsaturated, and substituted or unsubstituted, and, as desired, may contain one or more heteroatoms selected from the group consisting of sulfur, oxygen, and nitrogen, and, as desired, may contain one or more functional groups selected from the group consisting of ester, amide, sulfonamide, carbonyl, carbonate, urethane, urea, and carbamate. The linking group may be a group that does not contain a carbon atom and that is a catenary heteroatom such as oxygen, sulfur, or nitrogen.

$R^a$ is preferably a catenary heteroatom such as oxygen, sulfur, or nitrogen, or a divalent organic group.

When $R^a$ is a divalent organic group, the hydrogen atom bonded to the carbon atom may be replaced with halogen other than fluorine, such as chlorine, and may or may not contain a double bond. $R^a$ may be linear or branched, and may be cyclic or acyclic. $R^a$ may contain a functional group (such as ester, ether, ketone, amine, or halide).

$R^a$ may also be a fluorine-free divalent organic group or a partially fluorinated or perfluorinated divalent organic group.

$R^a$ may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, -(C=O)-, -(C=O)-O-, or a hydrocarbon group containing an ether bond, and these may contain an oxygen atom, may contain a double bond, and may contain a functional group.

$R^a$ is preferably a hydrocarbon group that has 1 to 4 carbon atoms, that may contain -(C=O)-, -(C=O)-O-, or an ether bond, and that may contain a carbonyl group, and in the hydrocarbon group, some or all hydrogen atoms bonded to carbon atoms may be replaced with fluorine.

$R^a$ is preferably a fluorinated alkylene group or a fluorinated oxyalkylene group. These are preferably linear. The number of carbon atoms in these is selected so that the number of carbon atoms in the portion excluding the hydrophilic group of the fluorine-containing compound (A) becomes 6 or less.

Because the polymerization of the fluorine-containing monomer can be made to progress more smoothly while further suppressing adhesion of the fluorine-containing elastomer to the polymerization tank, the fluorine-containing compound (A) is preferably at least one selected from the group consisting of a compound represented by general formula (A1):

$$CX^iX^k=CX^j\text{-}O\text{-}R\text{-}(CZ^1Z^2)_k\text{-}Y^3$$

wherein $X^i$, $X^j$, $X^k$, $Z^1$, $Z^2$, k, and $Y^3$ are as described above; R is a fluorinated alkylene group or fluorinated oxyalkylene group having 1 to 3 carbon atoms; and a compound represented by general formula (A2):

$$CX^iX^k=CX^j\text{-}CZ^1Z^2\text{-}O\text{-}R\text{-}(CZ^1Z^2)_k\text{-}Y^3$$

wherein $X^i$, $X^j$, $X^k$, $Z^1$, $Z^2$, k, and $Y^3$ are as described above; R is a fluorinated alkylene group or fluorinated oxyalkylene group having 1 or 2 carbon atoms.

In particular, the fluorine-containing compound (A) is preferably a compound represented by the general formula:

$CF_2=CFOCF_2\text{-}Y^3$,

$CF_2=CFOCF_2CF_2\text{-}Y^3$,

$CF_2=CFOCF_2CF_2CF_2\text{-}Y^3$,

$CF_2=CFOCF_2CF_2CH_2\text{-}Y^3$,

$CF_2=CFOCF_2CF_2CF_2CF_2\text{-}Y^3$,

$CF_2=CFOCF_2CF(CF_3)OCF_2\text{-}Y^3$,

$CF_2=CFOCF_2CF_2OCF(CF_3)\text{-}Y^3$,

$CF_2=CFOCF_2CF_2OCF_2\text{-}Y^3$,

$CH_2=CFCF_2OCF_2\text{-}Y^3$,

$CH_2=CFCF_2OCF(CF_3)\text{-}Y^3$,

$CH_2=CFCF_2OCH_2CF_2\text{-}Y^3$,

$CH_2=CFCF_2OCF_2CF_2\text{-}Y^3$,

$CH_2=CFCF_2OCF_2CH_2\text{-}Y^3$,

$CH_2=CFCF_2OCH_2CF_2CH_2\text{-}Y^3$,

$CH_2=CFCF_2OCF_2CF_2CH_2\text{-}Y^3$,

$CH_2=CFCF_2OCF_2CF_2CF_2\text{-}Y^3$,

$CH_2=CFCF_2OCF(CF_3)CH_2\text{-}Y^3$,

$CH_2=CFCF_2OCF(CF_3)CF_2\text{-}Y^3$,

$CH_2=CFCF_2OCF_2CF_2OCF_2\text{-}Y^3$,

$CF_2=CFCF_2OCF_2CF_2CF_2\text{-}Y^3$,

$CF_2=CFCF_2OCF_2CF(CF_3)-Y^3$,

$CF_2=CFCF_2OCF(CF_3)-Y^3$,

$CF_2=CFCF_2OCF(CF_3)CH_2-Y^3$, or

$CF_2=CFCF_2OCF(CF_3)CF_2-Y^3$.

The method for feeding the fluorine-containing compound (A) is not limited, and the fluorine-containing compound (A) may be fully and collectively fed at a point after the initiation of polymerization, may be continuously fed after the initiation of polymerization, or may be intermittently fed. For example, when the fluorine-containing monomer is continuously or intermittently fed to the polymerization system, the fluorine-containing compound (A) may be continuously fed until the feed amount of the fluorine-containing monomer reaches any point after the feed amount of the fluorine-containing monomer reaches any amount.

The feeding time of the fluorine-containing compound (A) is not limited as long as the feeding time is after the initiation of polymerization. When the fluorine-containing monomer is continuously or intermittently fed to the polymerization system, a suitable feeding point in the case of collectively feeding the fluorine-containing compound (A) or a suitable feeding time in the case of continuously or intermittently feeding the fluorine-containing compound (A) will be exemplified below.

When the fluorine-containing compound (A) is collectively fed at a point after the initiation of polymerization, the fluorine-containing compound (A) is preferably fed after the feed amount (g) of the fluorine-containing monomer that is fed after the initiation of polymerization reaches 5% of the total feed amount (g) of the fluorine-containing monomer that is fed after the initiation of polymerization. The fluorine-containing compound (A) is preferably fed after the feed amount of the fluorine-containing monomer that is fed after the initiation of polymerization reaches 10%, 20%, 30% or 40%.

When the fluorine-containing compound (A) is collectively fed at a point after the initiation of polymerization, the fluorine-containing compound (A) is preferably fed until the feed amount (g) of the fluorine-containing monomer that is fed after the initiation of polymerization reaches 90% of the total feed amount (g) of the fluorine-containing monomer that is fed after the initiation of polymerization. The fluorine-containing compound (A) is preferably fed until the feed amount of the fluorine-containing monomer that is fed after the initiation of polymerization reaches 85%, 80%, 75% or 70%.

When the fluorine-containing compound (A) is continuously or intermittently fed, the feeding of the fluorine-containing compound (A) is preferably initiated after the feed amount (g) of the fluorine-containing monomer that is fed after the initiation of polymerization reaches 5% of the total feed amount (g) of the fluorine-containing monomer that is fed after the initiation of polymerization because adhesion of the fluorine-containing elastomer to the polymerization tank can be further suppressed. The feeding of the fluorine-containing compound (A) is preferably initiated after the feed amount of the fluorine-containing monomer that is fed after the initiation of polymerization reaches 10%, 20%, 30% or 40%.

When the fluorine-containing compound (A) is continuously or intermittently fed, the feeding of the fluorine-containing compound (A) is preferably stopped until the feed amount (g) of the fluorine-containing monomer that is fed after the initiation of polymerization reaches 90% of the total feed amount (g) of the fluorine-containing monomer that is fed after the initiation of polymerization because adhesion of the fluorine-containing elastomer to the polymerization tank can be further suppressed. The feeding of the fluorine-containing compound (A) is preferably stopped until the feed amount of the fluorine-containing monomer that is fed after the initiation of polymerization reaches 85%, 80%, 75% or 70%.

The fluorine-containing compound (A) is fed immediately after the initiation of polymerization, and the fluorine-containing compound (A) may also be further fed after the polymerization reaction progresses for a certain time. For example, when the fluorine-containing monomer is continuously or intermittently fed to the polymerization system, the fluorine-containing compound (A) is fed immediately after the initiation of polymerization, and the fluorine-containing compound (A) may also be further fed after a certain amount of the fluorine-containing monomer is fed. Such a feeding method does not only make it possible to suppress adhesion of the fluorine-containing elastomer to the polymerization tank but also makes it possible to make the polymerization of the fluorine-containing monomer progress more smoothly by increasing the number of the particles of the fluorine-containing elastomer that is produced by the polymerization. Herein, the phrase "immediately after the initiation of polymerization" is, for example, a period before the feed amount (g) of the fluorine-containing monomer that is fed after the initiation of polymerization reaches 1% of the total feed amount (g) of the fluorine-containing monomer that is fed after the initiation of polymerization when the fluorine-containing monomer is continuously or intermittently fed to the polymerization system. The feeding point in time or feeding time of the fluorine-containing compound (A) when the fluorine-containing compound (A) is further fed after the polymerization reaction progresses for a certain time (after a certain amount of the fluorine-containing monomer is fed) can be regulated to the above-exemplified suitable feeding point in the case of collectively feeding the fluorine-containing compound (A) or suitable feeding time in the case of continuously or intermittently feeding the fluorine-containing compound (A).

Because the polymerization of the fluorine-containing monomer is usually initiated by the addition of a polymerization initiator to the polymerization system, the point when the polymerization reaction of the fluorine-containing monomer is initiated is usually the point when the polymerization initiator is added to the polymerization system or the point when the polymerization initiator is added to the polymerization system for the first time when the polymerization initiator is continuously or intermittently added to the polymerization system. Herein, the phrase "after the initiation of polymerization" means a polymerization period until the point when the polymerization reaction of the fluorine-containing monomer terminates later than the point when the polymerization initiator is added to the polymerization system for the first time. Herein, the phrase "before the initiation of polymerization" means the point when the polymerization initiator is added to the polymerization system for the first time and a period before that point.

The feed amount of the fluorine-containing compound (A) that is fed after the initiation of polymerization of the fluorine-containing monomer is preferably 30 to 5,000 mass ppm, more preferably 80 mass ppm or more, even more preferably 130 mass ppm or more, particularly preferably 150 mass ppm or more, and most preferably 180 mass ppm or more, and is more preferably 1,000 mass ppm or less, even more preferably 500 mass ppm or less, and particularly preferably 450 mass ppm or less based on the aqueous medium. By regulating the feed amount of the fluorine-containing compound (A) that is fed after the initiation of polymerization of the fluorine-containing monomer to the above range, the polymerization of the fluorine-containing monomer can be made to progress more smoothly while further suppressing adhesion of the fluorine-containing elastomer to the polymerization tank.

Furthermore, in the production method of the present disclosure, the feed amount of the fluorine-containing compound (A) that is fed after the initiation of polymerization of the fluorine-containing monomer may be 300 mass ppm or less, may be 250 mass ppm or less, or may be 200 mass ppm or less. Because the fluorine-containing compound (A) having a specific structure is used in the production method of the present disclosure, even when the feed amount of the fluorine-containing compound (A) is extremely small as described above, the polymerization of the fluorine-containing monomer can be made to progress smoothly while suppressing adhesion of the fluorine-containing elastomer to the polymerization tank.

Herein, the feed amount of the fluorine-containing compound (A) that is fed after the initiation of polymerization is the feed amount of the fluorine-containing compound (A) that is fed to the polymerization system until the polymerization reaction of the fluorine-containing monomer terminates after the initiation of polymerization of the fluorine-containing monomer and does not include the feed amount of the fluorine-containing compound (A) that is fed to the polymerization system at the point when the polymerization reaction of the fluorine-containing monomer is initiated and before that point.

In the production method of the present disclosure, the fluorine-containing compound (A) is fed after the initiation of polymerization of the fluorine-containing monomer; however, the fluorine-containing compound (A) is preferably also fed before the initiation of polymerization of the fluorine-containing monomer. The feeding of the fluorine-containing compound (A) also before the initiation of polymerization of the fluorine-containing monomer makes it possible to increase the number of the fluorine-containing elastomer particles that are produced by the polymerization and makes it possible to make the polymerization of the fluorine-containing monomer progress more smoothly.

The feed amount of the fluorine-containing compound (A) that is fed before the initiation of polymerization of the fluorine-containing monomer is preferably 5 to 5,000 mass ppm, more preferably 10 mass ppm or more, and even more preferably 15 mass ppm or more, and is more preferably 1,000 mass ppm or less, even more preferably 500 mass ppm or less, particularly preferably 300 mass ppm or less, and most preferably 200 mass ppm or less based on the aqueous medium. By regulating the feed amount of the fluorine-containing compound (A) that is fed before the initiation of polymerization of the fluorine-containing monomer to the above range, it is possible to produce a large number of fluorine-containing elastomer particles, and the polymerization of the fluorine-containing monomer can be made to progress more smoothly.

Furthermore, in the production method of the present disclosure, the feed amount of the fluorine-containing compound (A) that is fed before the initiation of polymerization of the fluorine-containing monomer may be 150 mass ppm or less, may be 100 mass ppm or less, or may be 70 mass ppm or less. Because the fluorine-containing compound (A) having a specific structure is used in the production method of the present disclosure, even when the feed amount of the fluorine-containing compound (A) that is fed before the initiation of polymerization is extremely small, it is possible to produce a sufficient number of fluorine-containing elastomer particles, and the polymerization of the fluorine-containing monomer can be made to progress smoothly.

When the fluorine-containing compound (A) is fed before and after the initiation of polymerization, the total of the feed amount of the fluorine-containing compound (A) that is fed before the initiation of polymerization of the fluorine-containing monomer and the feed amount of the fluorine-containing compound (A) that is fed after the initiation of polymerization of the fluorine-containing monomer is preferably 30 to 5,000 mass ppm, more preferably 100 mass ppm or more, even more preferably 150 mass ppm or more, particularly preferably 200 mass ppm or more, and most preferably 250 mass ppm or more, and is more preferably 1,000 mass ppm or less, and even more preferably 500 mass ppm or less based on the aqueous medium. By regulating the total of the feed amounts of the fluorine-containing compound (A) to the above range, an even greater number of fluorine-containing elastomer particles can be produced at a higher

polymerization rate while further suppressing adhesion of the fluorine-containing elastomer to a polymerization tank, and, furthermore, the polymerization of the fluorine-containing monomer can be made to progress more smoothly.

Furthermore, in the production method of the present disclosure, when the fluorine-containing compound (A) is fed before and after the initiation of polymerization, the total of the feed amount of the fluorine-containing compound (A) that is fed before the initiation of polymerization of the fluorine-containing monomer and the feed amount of the fluorine-containing compound (A) that is fed after the initiation of polymerization of the fluorine-containing monomer may be 450 mass ppm or less, may be 400 mass ppm or less, may be 350 mass ppm or less, may be 300 mass ppm or less, or may be 250 mass ppm or less. Because the fluorine-containing compound (A) having a specific structure is used in the production method of the present disclosure, even when the total feed amount of the fluorine-containing compound (A) is extremely small, it is possible to produce a sufficient number of fluorine-containing elastomer particles at a sufficient polymerization rate while suppressing adhesion of the fluorine-containing elastomer to the polymerization tank, and, furthermore, the polymerization of the fluorine-containing monomer can be made to progress smoothly.

When the fluorine-containing compound (A) is fed before and after the initiation of polymerization, the mass ratio ((a)/(b)) of the feed amount (a) of the fluorine-containing compound (A) that is fed before the initiation of polymerization of the fluorine-containing monomer to the feed amount (b) of the fluorine-containing compound (A) that is fed after the initiation of polymerization of the fluorine-containing monomer is preferably 1/20 to 2/1, more preferably 1/10 to 1/1, and even more preferably 1/10 to 7/10. By regulating the mass ratio ((a)/(b)) to the above range, an even greater number of fluorine-containing elastomer particles can be produced at a higher polymerization rate while further suppressing adhesion of the fluorine-containing elastomer to a polymerization tank, and, furthermore, the polymerization of the fluorine-containing monomer can be made to progress more smoothly.

The method for feeding the fluorine-containing compound (A) may be a method in which the fluorine-containing compound (A) is fed from a pipe connected to the polymerization tank using a pump. The feeding rate of the fluorine-containing compound (A) may be constant or may be changed. The fluorine-containing compound (A) may be continuously added dropwise. An aqueous solution of the fluorine-containing compound (A) may be fed after the aqueous solution of the fluorine-containing compound (A) is prepared by dissolving or dispersing the fluorine-containing compound (A) in water.

In the production method of the present disclosure, the polymerization of the fluorine-containing monomer can be carried out by, for example, introducing an aqueous medium into a pressure-tight polymerization tank equipped with a stirrer, deoxygenating the polymerization tank, then introducing the monomer, heating a surfactant to a predetermined temperature, and then feeding the fluorine-containing compound (A) to the polymerization tank after the initiation of polymerization. The fluorine-containing compound (A) is fed to the polymerization tank after the initiation of polymerization, and the fluorine-containing compound (A) may also be fed to the polymerization tank before the initiation of polymerization. Since the pressure decreases as the reaction progresses, an additional monomer is continuously or intermittently fed to maintain the initial pressure, the feeding is stopped when a predetermined amount of the monomer is fed, the monomer in the reaction container is purged, and the temperature is returned to room temperature to terminate the reaction.

In the production method of the present disclosure, the polymerization may be carried out in the presence of a polymerization initiator.

The polymerization initiator may be a radical polymerization initiator. The polymerization initiator is not limited as long as it can produce radicals at the temperature of polymerizing the fluorine-containing monomer, and an oil-soluble polymerization initiator, a water-soluble polymerization initiator, and the like can be used while a water-soluble polymerization initiator is preferable. The polymerization initiator may be combined with a reducing agent or the like to be used as a redox initiator.

The amount of the polymerization initiator when polymerizing the fluorine-containing monomer is suitably determined according to the type of the monomer, the molecular weight of the intended fluorine-containing elastomer, and the reaction rate. The amount of the polymerization initiator is suitably determined according to the molecular weight of the intended fluorine-containing elastomer and the polymerization reaction rate, and is preferably 0.00001 to 10 mass% and more preferably 0.0001 to 1 mass% based on 100 mass% of the total amount of the monomer.

The polymerization initiator may be an oil-soluble radical polymerization initiator, a water-soluble radical polymerization initiator, or an azo compound.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω)-hydro-dodecafluoroheptanoyl)peroxide, di(ω)-hydro-tetradecafluorooctanoyl)peroxide, di(ω)-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω)-chloro-hexafluorobutyryl)peroxide, di(ω)-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

Examples of the azo compound include azodicarboxylate, azodicarboxyl diamide, 2,2'-azobisisobutyronitrile, 2,2'-azobis(2,4-dimethylvaleronitrile), 2,2'-azobis(2-methylpropionamidine) dihydrochloride, and 4,4'-azobis(4-cyanovaleric acid).

The water-soluble radical polymerization initiator may be a known water-soluble peroxide, and examples include ammonium salts, potassium salts, and sodium salts of persulfuric acid, perboric acid, perchloric acid, perphosphoric acid, percarbonic acid, and the like, organic peroxides such as disuccinic acid peroxide and diglutaric acid peroxide, t-butyl permaleate, and t-butyl hydroperoxide. A reducing agent such as sulfite may be contained together, and the amount thereof may be 0.1 to 20 times the amount of the peroxide.

The water-soluble peroxide is preferably a salt of persulfuric acid because the amount of radicals to be produced can be easily regulated, and potassium persulfate ($K_2S_2O_8$), ammonium persulfate ($(NH_4)2S_2O_8$), and sodium persulfate ($Na_2S_2O_8$) are preferable, and ammonium persulfate is most preferable.

When carrying out the polymerization using a water-soluble peroxide at a polymerization temperature of 45°C or higher, the polymerization is preferably carried out without using a reducing agent.

For example, when carrying out the polymerization at a low temperature of 60°C or lower, the polymerization initiator to be used is preferably a redox initiator obtained by combining an oxidizing agent and a reducing agent. That is to say, the polymerization is preferably carried out in the presence of a redox initiator.

Examples of the oxidizing agent include persulfates, organic peroxides, potassium permanganate, manganese triacetate, ammonium cerium nitrate, and bromates. Examples of the reducing agent include sulfites, bisulfites, bromates, diimine, oxalic acid, and sulfinic acid metal salts. Examples of persulfates include ammonium persulfate, potassium persulfate, and sodium persulfate. Examples of sulfites include sodium sulfite and ammonium sulfite. To increase the decomposition rate of the initiator, preferably a copper salt or an iron salt is also added to the combination of the redox initiator. The copper salt may be copper(II) sulfate, and the iron salt may be iron(II) sulfate. When a copper salt or an iron salt is used, a chelating agent is added particularly preferably. The chelating agent is preferably disodium ethylenediaminetetraacetate dihydrate.

Examples of the redox initiator include potassium permanganate/oxalic acid, ammonium persulfate/a bisulfurous acid salt/iron(II) sulfate, ammonium persulfate/a sulfurous acid salt/iron (II) sulfate, ammonium persulfate/a sulfurous acid salt, ammonium persulfate/iron(II) sulfate, manganese triacetate/oxalic acid, cerium ammonium nitrate/oxalic acid, a bromic acid salt/a sulfurous acid salt, a bromic acid salt/a bisulfurous acid salt, and ammonium persulfate/sodium hydroxymethanesulfinate dihydrate, and ammonium persulfate/sodium hydroxymethanesulfinate dihydrate is preferable.

When using a redox initiator, one of an oxidizing agent and a reducing agent may be introduced into a polymerization tank in advance, and then the other may be added continuously or intermittently to initiate the polymerization. For example, when using ammonium persulfate/sodium hydroxymethanesulfinate dihydrate, preferably ammonium persulfate is introduced into a polymerization tank, and then sodium hydroxymethanesulfinate dihydrate is continuously added thereto.

The amount of persulfate used in the redox initiator is preferably 0.001 to 2.0 mass%, more preferably 0.01 to 1.5 mass%, and particularly preferably 0.05 to 1.0 mass% based on the aqueous medium used in the polymerization.

The amount of the reducing agent used is preferably 1 to 30 mass%, more preferably 3 to 25 mass%, and particularly preferably 5 to 20 mass% based on the aqueous medium used in the polymerization.

The amount of the third component (such as the above copper salt or iron salt) used is preferably 0.001 to 0.5 mass%, more preferably 0.005 to 0.4 mass%, and particularly preferably 0.01 to 0.3 mass% based on the aqueous medium used in the polymerization.

In the production method of the present disclosure, the fluorine-containing monomer may be polymerized also in the presence of a chain transfer agent. The chain transfer agent may be a known chain transfer agent, and, for example, hydrocarbon, ester, ether, alcohol, ketone, a halogen-containing compound, carbonate, and the like are usable. In particular, isopentane, diethyl malonate, and ethyl acetate are preferable from the viewpoint that the reaction rate is unlikely impaired, and diiodine compounds such as $I(CF_2)_4I$, $I(CF_2)_6I$, and $ICH_2I$ are preferable from the viewpoint that the polymer terminal can be iodinated, and such a compound can be used as a reactive polymer.

The chain transfer agent used is particularly preferably a bromine compound or an iodine compound. The polymerization method involving a bromine compound or an iodine compound is, for example, iodine transfer polymerization or bromine transfer polymerization.

The iodine compound and the bromine compound are water-insoluble and are unlikely emulsified. Accordingly, their use is conventionally limited in emulsion polymerization, and there is a tendency that a large amount of a surfactant has to be used. According to the production method of the present disclosure, the fluorine-containing elastomer can be obtained by polymerization involving an iodine compound or a bromine compound, such as iodine transfer polymerization or bromine transfer polymerization, even in the absence of a conventionally used surfactant.

Iodine transfer polymerization refers to a method involving living radical polymerization by a radical chain reactivation mechanism, which is radically active due to a low carbon-iodine bond dissociation energy and occurs due to the involvement of a chain transfer reaction during the course of a radical polymerization reaction. Known reaction conditions can be suitably used, and, for example, the reaction conditions described in, but are not limited to, "KOBUNSHI RONBUNSHU (Japanese Journal of Polymer Science and Technology), Vol. 49, No. 10, pp. 765-783, October 1992", Japanese Patent Laid-Open No. 53-3495, and the like can be suitably adopted. Similar polymerization can be carried out by using a bromine compound in place of an iodine compound, and such polymerization is referred to as bromine transfer polymerization herein.

Among these, iodine transfer polymerization is preferable in terms of polymerization reactivity, crosslinking reactivity, and the like.

Representative examples of the bromine compound and the iodine compound include compounds represented by the following general formula:

$$R^8I_xBr_y$$

wherein x and y are each independently an integer of 0 to 2 and satisfy $1 \leq x+y \leq 2$, and $R^8$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. Iodine or bromine is introduced into a polymer by using a bromine compound or an iodine compound, and functions as a crosslinking point.

Examples of the bromine compound and the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, $CF_2Br_2$, $BrCF_2CF_2Br$, $CF_3CFBrCF_2Br$, $CFClBr_2$, $BrCF_2CFClBr$, $CFBrClCFClBr$, $BrCF_2CF_2CF_2Br$, $BrCF_2CFBrOCF_3$, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be mutually combined and used.

Among these, in terms of polymerization reactivity, crosslinking reactivity, availability, and the like, compounds that do not contain bromine and solely contain iodine are preferable, and 1,4-diiodoperfluorobutane, 1,6-diiodoperfluorohexane, or 2-iodoperfluoropropane is preferably used.

The amount of the chain transfer agent is preferably $0.2\times10^{-3}$ to 2 mol% and more preferably $1.0\times10^{-3}$ to 1 mol% based on the total amount of the monomer used in the polymerization.

The aqueous medium means a liquid containing water. The aqueous medium is not limited as long as it contains water, and may be a medium that contains water and, for example, a fluorine-free organic solvent such as alcohol, ether, or ketone and/or a fluorine-containing organic solvent having a boiling point of 40°C or lower.

In the polymerization of the fluorine-containing monomer, a phosphoric acid salt, sodium hydroxide, potassium hydroxide, ammonia water, or the like may be used as a pH adjuster.

The aqueous medium is preferably acidic. By polymerizing the fluorine-containing monomer in the presence of the fluorine-containing compound (A) using an acidic aqueous medium, adhesion of the fluorine-containing polymer to the polymerization tank can be further suppressed. The pH of the aqueous medium is preferably 7 or lower and more preferably 6 or lower, and is preferably 3 or higher.

In the production method of the present disclosure, the fluorine-containing monomer may be polymerized in the presence or absence of fluorine-containing monomer polymerization seed particles.

The "fluorine-containing monomer polymerization seed particles" are obtained by polymerizing the fluorine-containing monomer in an aqueous medium, and are caused to be present at the time of the second polymerization in which the type and the proportion of existing components such as monomers and additives (e.g., a polymerization initiator) constituting the polymerization reaction system, the reaction conditions, and the like are different. The fluorine-containing monomer polymerization seed particles act as so-called seed particles at the time of polymerizing the fluorine-containing monomer, and constitute the polymerization of the fluorine-containing monomer in the presence of the seed particles, i.e., seed polymerization. The production method of the present disclosure may be a method in which such seed polymerization is not carried out when polymerizing the fluorine-containing monomer.

In the production method of the present disclosure, the polymerization temperature for polymerizing the fluorine-containing monomer is preferably 10 to 120°C, and more preferably 20 to 100°C. From the viewpoint of the stability of the aqueous dispersion and reducing the adhesion rate, the polymerization temperature is preferably 15 to 60°C, more preferably 18 to 55°C, and even more preferably 20 to 50°C. The polymerization temperature is preferably 60 to 120°C, more preferably 60 to 100°C, and even more preferably 70 to 90°C because the polymerization rate is increased and, moreover, a fluorine-containing elastomer that provides a formed article having excellent physical properties can be

obtained.

In the production method of the present disclosure, the polymerization pressure for polymerizing the fluorine-containing monomer is preferably 0.5 to 10 MPaG, and more preferably 1 to 7 MPaG.

In the production method of the present disclosure, the fluorine-containing monomer is polymerized in the presence of the fluorine-containing compound (A) and an aqueous medium, and thus adhesion of a polymer (a fluorine-containing elastomer) to a polymerization tank can be suppressed. The adhesion rate of the polymer to a polymerization tank is preferably 8 mass% or less, more preferably 4 mass% or less, even more preferably 3 mass% or less, and most preferably 2 mass% or less.

The polymer adhesion rate is a ratio (an adhesion rate to a polymerization tank) of the mass of polymer deposits adhering to the polymerization tank after completion of polymerization to the total amount of the polymer (the fluorine-containing elastomer) after completion of polymerization. Polymer deposits include the polymer adhering to the inside of a polymerization tank such as the inner wall of a polymerization tank and a stirring blade after an aqueous dispersion is removed from the polymerization tank after completion of polymerization, and the polymer that is freed from the aqueous dispersion due to aggregation and floats or precipitates without being dispersed in the aqueous dispersion. The mass of polymer deposits is the mass after water contained in the polymer deposits is dried and removed at 120°C.

Polymer adhesion rate (mass%) = Mass of polymer deposits / Mass of resulting polymer (including deposits) × 100

Mass of resulting polymer = Mass of aqueous dispersion × Solid concentration (mass%) of aqueous dispersion / 100 + Mass of polymer deposits

In the production method of the present disclosure, an aqueous dispersion of the fluorine-containing elastomer is obtained by polymerizing the fluorine-containing monomer. The fluorine-containing monomer is preferably a fluorine-containing monomer (however, the fluorine-containing compound (A) is excluded) and more preferably contains no hydrophilic groups.

Examples of the fluorine-containing monomer include fluorine-containing monomers such as vinylidene fluoride (VdF), tetrafluoroethylene (TFE), hexafluoropropylene (HFP), perfluoro(alkyl vinyl ether) (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing vinyl fluoride ether, and fluorine-containing monomers (2) represented by general formula (2):

$$CHX^1=CX^2Rf \qquad (2)$$

wherein one of $X^1$ and $X^2$ is H, the other is F, and Rf is a linear or branched fluoroalkyl group having 1 to 12 carbon atoms.

PAVE is more preferably perfluoro(methyl vinyl ether) (PMVE), perfluoro(ethyl vinyl ether) (PEVE), or perfluoro(propyl vinyl ether) (PPVE), and particularly preferably PMVE.

PAVE may be perfluorovinyl ether represented by the formula: $CF_2=CFOCF_2ORf^c$ wherein $Rf^c$ is a linear or branched perfluoroalkyl group having 1 to 6 carbon atoms, a cyclic perfluoroalkyl group having 5 to 6 carbon atoms, or a linear or branched perfluorooxyalkyl group having 1 to 3 oxygen atoms and 2 to 6 carbon atoms. PAVE is preferably, for example, $CF_2=CFOCF_2OCF_3$, $CF_2=CFOCF_2OCF_2CF_3$, or $CF_2=CFOCF_2OCF_2CF_2OCF_3$.

The fluorine-containing monomer (2) is preferably a monomer in which Rf is a linear fluoroalkyl group, and is more preferably a monomer in which Rf is a linear perfluoroalkyl group. Rf preferably has 1 to 6 carbon atoms.

Examples of the fluorine-containing monomer (2) include $CH_2=CFCF_3$, $CH_2=CFCF_2CF_3$, $CH_2=CFCF_2CF_2CF_3$, $CH_2=CFCF_2CF_2CF_2CF_3$, $CHF=CHCF_3$ (1,3,3,3-tetrafluoropropene), $CHF=CHCF_3$ (E form), and $CHF=CHCF_3$ (Z form), and, in particular, 2,3,3,3-tetrafluoropropylene represented by $CH_2=CFCF_3$ is preferable.

In the production method of the present disclosure, at least vinylidene fluoride or tetrafluoroethylene is preferably polymerized as the fluorine-containing monomer, and vinylidene fluoride is more preferably polymerized, because adhesion of the fluorine-containing elastomer to a polymerization tank can be further suppressed.

In the production method of the present disclosure, a fluorine-free monomer may be polymerized together with the fluorine-containing monomer. Examples of the fluorine-free monomer include $\alpha$-olefin monomers having 2 to 10 carbon atoms, such as ethylene, propylene, butene, and pentene, and alkyl vinyl ethers having an alkyl group having 1

to 20 carbon atoms, such as methyl vinyl ether, ethyl vinyl ether, propyl vinyl ether, cyclohexyl vinyl ether, hydroxybutyl vinyl ether, and butyl vinyl ether, and one or a combination of two or more of these monomers and compounds can be used.

The production method of the present disclosure is capable of producing an aqueous dispersion containing a fluorine-containing elastomer. The fluorine-containing elastomer that is obtained by the production method of the present disclosure contains a methylene group ($-CH_2-$) in the main chain. The fluorine-containing elastomer containing $-CH_2-$in the main chain is not limited as long as it contains a chemical structure represented by $-CH_2-$, examples include fluorine-containing elastomers containing a structure such as $-CH_2-CF_2-$, $-CH_2-CH(CH_3)-$, $-CH_2-CH_2-$, or $-CH_2-CF_2-(CF_3)-$, and these can be introduced into the main chain of a fluorine-containing elastomer by polymerizing, for example, vinylidene fluoride, propylene, ethylene, and 2,3,3,3-tetrafluoropropylene. The content of tetrafluoroethylene unit in the fluorine-containing elastomer (the content of a monomer unit that is based on tetrafluoroethylene relative to all monomer units of the fluorine-containing elastomer) may be less than 40 mol%.

Because the polymerization of the fluorine-containing monomer can be made to progress more smoothly while further suppressing adhesion of the fluorine-containing elastomer to the polymerization tank, the fluorine-containing elastomer is preferably a partially fluorinated elastomer. The partially fluorinated elastomer is a fluoropolymer that contains a fluorine-containing monomer unit, in which the content of a perfluoromonomer unit is less than 90 mol% based on all monomer units, and that has a glass transition temperature of 20°C or lower and a melting peak ($\Delta H$) size of 4.5 J/g or less.

The fluorine-containing elastomer preferably contains a monomer unit based on at least one monomer selected from the group consisting of, for example, tetrafluoroethylene (TFE), vinylidene fluoride (VdF), and a perfluoroethylenically unsaturated compound (such as hexafluoropropylene (HFP) or perfluoro(alkyl vinyl ether) (PAVE)) represented by the general formula: $CF_2=CF-Rf^a$ wherein $Rf^a$ is $-CF_3$ or $-ORf^b$ ($Rf^b$ is a perfluoroalkyl group having 1 to 5 carbon atoms). The fluorine-containing elastomer, in particular, preferably contains a VdF unit or a TFE unit, and more preferably contains a VDF unit.

More specific examples of the fluorine-containing elastomer include a VdF-based fluorine-containing elastomer, a TFE/propylene (Pr)-based fluorine-containing elastomer, a TFE/Pr/VdF-based fluorine-containing elastomer, an ethylene (Et)/HFP-based fluorine-containing elastomer, an Et/HFP/VdF-based fluorine-containing elastomer, an Et/HFP/TFE-based fluorine-containing elastomer, and an Et/TFE/PAVE-based fluorine-containing elastomer. Among these, a VdF-based fluorine-containing elastomer, a TFE/Pr-based fluorine-containing elastomer, a TFE/Pr/VdF-based fluorine-containing elastomer, and an Et/TFE/PAVE-based fluorine-containing elastomer are more suitable in terms of good heat aging resistance and oil resistance.

The VdF-based fluorine-containing elastomer is a fluorine-containing elastomer having a VdF unit. The content of the VdF unit in the fluorine-containing elastomer is preferably 20 mol% or more, more preferably 40 mol% or more, even more preferably 50 mol% or more, and particularly preferably 60 mol% or more based on all monomer units. The VdF-based fluorine-containing elastomer preferably has a VdF unit that accounts for 20 mol% or more and 90 mol% or less, more preferably 40 mol% or more and 85 mol% or less, even more preferably 45 mol% or more and 80 mol% or less, and particularly preferably 50 mol% or more and 80 mol% or less of the total number of moles of the VdF unit and the monomer unit based on further monomers.

Further monomers in the VdF-based fluorine-containing elastomer are not limited as long as they are monomers that are copolymerizable with VdF, and, for example, the above-described fluorine-containing monomers are usable.

The VdF-based fluorine-containing elastomer is preferably at least one copolymer selected from the group consisting of a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF/fluorine-containing monomer (2). Further monomers other than VdF more preferably have at least one monomer selected from the group consisting of TFE, HFP, and PAVE.

Among these VdF-based fluorine-containing elastomers, at least one copolymer selected from the group consisting of a VdF/HFP copolymer, a VdF/TFE/HFP copolymer, a copolymer of VdF/fluorine-containing monomer (2), a VdF/PAVE copolymer, a VdF/TFE/PAVE copolymer, a VdF/HFP/PAVE copolymer, and a VdF/HFP/TFE/PAVE copolymer is preferable, and at least one copolymer selected from the group consisting of a VdF/HFP copolymer, a VdF/HFP/TFE copolymer, a copolymer of VdF/fluorine-containing monomer (2), and a VdF/PAVE copolymer is more preferable.

The VdF/PAVE copolymer preferably has a VdF/PAVE composition of (65 to 90) / (35 to 10) (mol%).

In one preferable form, the VdF/PAVE composition is (50 to 78)/(50 to 22) (mol%).

The VdF/TFE/PAVE copolymer preferably has a VdF/TFE/PAVE composition of (40 to 80)/(3 to 40)/(15 to 35) (mol%).

The VdF/HFP/PAVE copolymer preferably has a VdF/HFP/PAVE composition of (65 to 90)/(3 to 25)/(3 to 25) (mol%).

The VdF/HFP/TFE/PAVE copolymer preferably has a VdF/HFP/TFE/PAVE composition of (40 to 90)/(0 to 25)/(0 to 40)/(3 to 35) (mol%), and more preferably (40 to 80)/(3 to 25)/(3 to 40)/(3 to 25) (mol%).

As for the copolymer of VdF/fluorine-containing monomer (2), preferably the VdF/fluorine-containing monomer (2) unit is (85 to 20)/(15 to 80) (mol%) and the unit of further monomers other than VdF and the fluorine-containing monomer (2) is 0 to 50 mol% of all monomer units, and the mol% ratio of the VdF/fluorine-containing monomer (2) unit is more preferably (80 to 20)/(20 to 80). It is also one of the preferable forms that the composition of the VdF/fluorine-containing monomer (2) unit is (78 to 50)/(22 to 50) (mol%).

The copolymer of VdF/fluorine-containing monomer (2) in which the VdF/fluorine-containing monomer (2) unit is (85 to 50)/(15 to 50) (mol%), and the unit of further monomers other than VdF and the fluorine-containing monomer (2) is 1 to 50 mol% of all monomer units, is also preferable. Further monomers other than VdF and the fluorine-containing monomer (2) are preferably monomers exemplified as further monomers with respect to the VdF-based fluorine-containing elastomer, such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, and a monomer that provides a crosslinkable group, and, in particular, PMVE, CTFE, HFP, and TFE are more preferable.

The TFE/Pr-based fluorine-containing elastomer refers to a fluorine-containing copolymer composed of 45 to 70 mol% TFE and 55 to 30 mol% Pr. In addition to these two components, a specific third component may be contained.

The specific third component contained may be, for example, a fluorine-containing monomer such as fluorine-containing olefin other than TFE (such as VdF, HFP, CTFE, or perfluoro(butylethylene)), fluorine-containing vinyl ether (perfluoro(propyl vinyl ether), or perfluoro(methyl vinyl ether)); or a hydrocarbon-based monomer such as $\alpha$-olefin (such as ethylene or 1-butene), vinyl ether (such as ethyl vinyl ether, butyl vinyl ether, or hydroxybutyl vinyl ether), or vinyl ester (such as vinyl acetate, vinyl benzoate, vinyl crotonate, or vinyl methacrylate). As for the specific third component, one or a combination of two or more may be used.

The TFE/Pr-based fluorine-containing elastomer preferably contains VdF, and as for the TFE/Pr-based fluorine-containing elastomer, an elastomer composed of TFE, Pr, and VdF is referred to as a TFE/Pr/VdF-based fluorine-containing elastomer.

The TFE/Pr/VdF-based fluorine-containing elastomer may further contain the above specific third component other than VdF. As for the specific third component, one or a combination of two or more may be used. The total content of the third component in the TFE/Pr-based fluorine-containing elastomer is preferably 35 mol% or less, more preferably 33 mol% or less, and even more preferably 31 mol% or less.

The Et/HFP copolymer preferably has an Et/HFP composition of (35 to 80)/(65 to 20) (mol%), and more preferably (40 to 75)/(60 to 25) (mol%).

The Et/HFP/TFE copolymer preferably has an Et/HFP/TFE composition of (35 to 75)/(25 to 50)/(0 to 15) (mol%), and more preferably (45 to 75)/(25 to 45)/(0 to 10) (mol%).

The Et/TFE/PAVE copolymer preferably has an Et/TFE/PAVE composition of (10 to 40)/(32 to 60)/(20 to 40) (mol%), and more preferably (20 to 40)/(40 to 50)/(20 to 30) (mol%). PAVE is preferably PMVE.

The fluorine-containing elastomer is preferably a fluorine-containing elastomer containing a VdF unit and more preferably a VdF/HFP copolymer or a VdF/HFP/TFE copolymer, and a fluorine-containing elastomer having a VdF/HFP/TFE composition of (32 to 85)/(10 to 34)/(0 to 40) (mol%) is particularly preferable. The VdF/HFP/TFE composition is more preferably (32 to 85)/(15 to 34)/(0 to 34) (mol%), and even more preferably (47 to 81)/(17 to 32) / (0 to 26) (mol%).

For example, the VdF/HFP copolymer preferably has a VdF/HFP composition of (45 to 85)/(15 to 55) (mol%), more preferably (50 to 83)/(17 to 50) (mol%), even more preferably (55 to 81)/(19 to 45) (mol%), and particularly preferably (60 to 80)/(20 to 40) (mol%).

The above-described configuration is the configuration of the main monomers of the fluorine-containing elastomer, and a monomer that provides a crosslinkable group may be copolymerized in addition to the main monomers. The monomer that provides a crosslinkable group is a monomer capable of introducing into the fluorine-containing elastomer a crosslinkable group suitable according to the production method and the crosslinking system, and examples include known polymerizable compounds containing a crosslinkable group such as an iodine atom, a bromine atom, a carbon-carbon double bond, a cyano group, a carboxyl group, a hydroxyl group, an amino group, or an ester group.

Preferable examples of the monomer that provides a crosslinkable group include compounds represented by general formula (3):

$$CY^1_2=CY^2R_f^2X^1 \qquad (3)$$

wherein $Y^1$ and $Y^2$ are each independently a fluorine atom, a hydrogen atom, or $-CH_3$; $R_f^2$ is a linear or branched fluorine-containing alkylene group that may have one or more ether-bonding oxygen atoms, that may have an aromatic ring, and in which some or all hydrogen atoms are replaced with fluorine atoms; and $X^1$ is an iodine atom or a bromine atom.

Specific examples of the monomer that provides a crosslinkable group include iodine or bromine-containing monomers represented by general formula (4):

$CY^1_2=CY^2R_f^3CHR^1-X^1$ (4)

wherein, $Y^1$, $Y^2$, and $X^1$ are as described above; $R_f^3$ is a linear or branched fluorine-containing alkylene group that may have one or more ether-bonding oxygen atoms and in which some or all hydrogen atoms are replaced with fluorine atoms, or that is to say, a linear or branched fluorine-containing alkylene group in which some or all hydrogen atoms are replaced with fluorine atoms, a linear or branched fluorine-containing oxyalkylene group in which some or all hydrogen atoms are replaced with fluorine atoms, or a linear or branched fluorine-containing polyoxyalkylene group in which some or all hydrogen atoms are replaced with fluorine atoms; and $R^1$ is a hydrogen atom or a methyl group, and

iodine or bromine-containing monomers represented by general formulae (5) to (22):

$CY^4_2=CY^4(CF_2)_n-X^1$ (5)

wherein $Y^4$ is the same or different and is a hydrogen atom or a fluorine atom, and n is an integer of 1 to 8,

$CF_2=CFCF_2R_f^4-X^1$ (6)

wherein $R^4$ is $-(OCF_2)_n-$ or $-(OCF(CF_3))_n-$, and n is an integer of 0 to 5,

$CF_2=CFCF_2(OCF(CF_3)CF_2)_m(OCH_2CF_2CF_2)_nOCH_2CF_2-X^1$ (7)

wherein m is an integer of 0 to 5, and n is an integer of 0 to 5,

$CF_2=CFCF_2(OCH_2CF_2CF_2)_m(OCF(CF_3)CF_2)_nOCF(CF_3)-X^1$ (8)

wherein m is an integer of 0 to 5, and n is an integer of 0 to 5),

$CF_2=CF(OCF_2CF(CF_3))_mO(CF_2)_n-X^1$ (9)

wherein m is an integer of 0 to 5, and n is an integer of 1 to 8),

$CF_2=CF(OCF_2CF(CF_3))_m-X^1$ (10)

wherein m is an integer of 1 to 5,

$CF_2=CFOCF_2(CF(CF_3)OCF_2)_nCF(-X^1)CF_3$ (11)

wherein n is an integer of 1 to 4,

$CF_2=CFO(CF_2)_nOCF(CF_3)-X^1$ (12)

wherein n is an integer of 2 to 5,

$CF_2=CFO(CF_2)_n-(C_6H_4)-X^1$ (13)

wherein n is an integer of 1 to 6,

$CF_2=CF(OCF_2CF(CF_3))_nOCF_2CF(CF_3)-X^1$ (14)

wherein n is an integer of 1 to 2,

$CH_2=CFCF_2O(CF(CF_3)CF_2O)_nCF(CF_3)-X^1$ (15)

wherein n is an integer of 0 to 5,

$CF_2=CFO(CF_2CF(CF_3)O)_m(CF_2)_n-X^1$ (16)

wherein m is an integer of 0 to 5, and n is an integer of 1 to 3,

$CH_2=CFCF_2OCF(CF_3)OCF(CF_3)-X^1$ (17)

$CH_2=CFCF_2OCH_2CF_2-X^1$ (18)

$CF_2=CFO(CF_2CF(CF_3)O)_mCF_2CF(CF_3)-X^1$ (19)

wherein m is an integer of 0 or more,

$CF_2=CFOCF(CF_3)CF_2O(CF_2)_n-X^1$ (20)

wherein n is an integer of 1 or more,

$CF_2=CFOCF_2OCF_2CF(CF_3)OCF_2-X^1$ (21),

and

$CH_2=CH-(CF_2)_nX^1$ (22)

wherein n is an integer of 2 to 8,
(in general formulae (5) to (22), $X^1$ is as described above), and
one of these can be used singly, or these can be used in any combination.

The iodine or bromine-containing monomer represented by general formula (4) is preferably iodine-containing fluorinated vinyl ether represented by general formula (23):

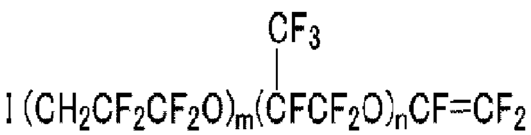 (23)

wherein m is an integer of 1 to 5, and n is an integer of 0 to 3,
more specifically

$ICH_3CF_2CF_2OCF=CF_2$, $I(CH_2CF_2CF_2O)_2CF=CF_2$,

$I(CH_2CF_2CF_2O)_3CF=CF_2$,

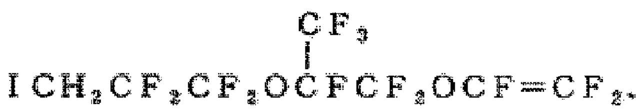

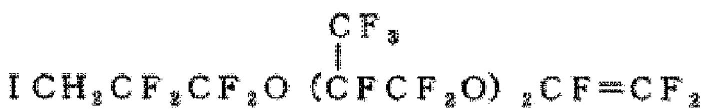

and among these, $ICH_2CF_2CF_2OCF=CF_2$ is preferable.

More specifically, the iodine or bromine-containing monomer represented by general formula (5) is preferably $ICF_2CF_2CF=CH_2$ or $I(CF_2CF_2)_2CF=CH_2$.

More specifically, the iodine or bromine-containing monomer represented by general formula (9) is preferably $I(CF_2CF_2)_2OCF=CF_2$.

More specifically, the iodine or bromine-containing monomer represented by general formula (22) is preferably $CH_2=CHCF_2CF_2I$ or $I(CF_2CF_2)_2CH=CH_2$.

The monomer that provides a crosslinkable group is preferably a bisolefin compound represented by the formula:

$$R^2R^3C=CR^4\text{-}Z\text{-}CR^5=CR^6R^7$$

wherein $R^2$, $R^3$, $R^4$, $R^5$, $R^6$, and $R^7$ are the same or different and are each independently H or an alkyl group having 1 to 5 carbon atoms; and Z is a linear or branched alkylene or cycloalkylene group having 1 to 18 carbon atoms that may contain an oxygen atom and that is preferably at least partially fluorinated, or a (per)fluoropolyoxyalkylene group. Herein, the "(per)fluoropolyoxyalkylene group" means "a fluoropolyoxyalkylene group or a perfluoropolyoxyalkylene group".

Z is preferably a (per)fluoroalkylene group having 4 to 12 carbon atoms, and $R^2$, $R^3$, $R^4$, $R^5$, $R^6$, and $R^7$ are preferably hydrogen atoms.

Z when being a (per)fluoropolyoxyalkylene group is preferably a (per)fluoropolyoxyalkylene group represented by the formula:

$$-(Q)_p-CF_2O-(CF_2CF_2O)_m-(CF_2O)_n-CF_2-(Q)_p-$$

wherein Q is an alkylene group having 1 to 10 carbon atoms or an oxyalkylene group having 2 to 10 carbon atoms, p is 0 or 1, and m and n are integers such that the m/n ratio is 0.2 to 5 and that the molecular weight of the (per)fluoropolyoxyalkylene group is in a range of 500 to 10,000 and preferably 1,000 to 4,000. In this formula, Q is preferably selected from $-CH_2OCH_2-$ and $-CH_2O(CH_2CH_2O)_sCH_2-$ (s = 1 to 3).

Preferable bisolefin is

$CH_2=CH-(CF_2)_2-CH=CH_2$,

$CH_2=CH-(CF_2)_4-CH=CH_2$,

$CH_2=CH-(CF_2)_6-CH=CH_2$,

formula: $CH_2=CH-Z^1-CH=CH_2$

wherein $Z^1$ is $-CH_2OCH_2-CF_2O-(CF_2CF_2O)_m-(CF_2O)_n-CF_2-CH_2OCH_2-$ (m/n is 0.5), and the molecular weight is preferably 2,000, and the like.

In particular, 3,3,4,4,5,5,6,6,7,7,8,8-dodecafluoro-1,9-decadiene represented by $CH_2=CH-(CF_2)_6-CH=CH_2$ is preferable.

The number average molecular weight Mn of the fluorine-containing elastomer is preferably 1,000 to 1,000,000, more preferably 10,000 to 500,000, and particularly preferably 20,000 to 300,000.

The fluorine content of the fluorine-containing elastomer is preferably 50 mass% or more, more preferably 55 mass% or more, and even more preferably 60 mass% or more. The upper limit of the fluorine content is preferably 75 mass% or less, and more preferably 73 mass% or less. The fluorine content is calculated based on a measured value obtained by $^{19}F$-NMR, $^{1}H$-NMR, elemental analysis, or the like.

The fluorine-containing elastomer preferably has a Mooney viscosity at 100°C (ML1 + 10 (100°C)) of 130 or less. The Mooney viscosity is more preferably 110 or less, and even more preferably 90 or less. The Mooney viscosity is more preferably 10 or more, and even more preferably 20 or more. Here, the Mooney viscosity is a value measured in accordance with JIS K 6300-1.2013.

The fluorine-containing elastomer preferably has a glass transition temperature of -50 to 0°C. The glass transition temperature is more preferably -2°C or lower, and even more preferably -3°C or lower. The glass transition temperature is more preferably -45°C or higher, and even more preferably -40°C or higher. The glass transition temperature may be -10°C or higher, and may be -9°C or higher. Here, the glass transition temperature can be determined by heating 10 mg of a sample at 20°C/min to give a DSC curve using a differential scanning calorimeter (e.g., X-DSC 7000 manufactured by Hitachi High-Tech Science Corporation) and calculating a glass transition temperature from a DSC differential curve in accordance with JIS K 6240:2011.

The fluorine-containing elastomer preferably has an iodine content of 0.05 to 1.0 mass%. The iodine content is more preferably 0.08 mass% or more, and even more preferably 0.10 mass% or more, and is more preferably 0.80 mass% or less, and even more preferably 0.60 mass% or less.

The iodine content can be determined by elemental analysis. Specifically, the iodine content can be measured by mixing 5 mg of $Na_2SO_3$ with 12 mg of the fluorine-containing elastomer, combusting the mixture in oxygen in a quartz flask using an absorbent obtained by dissolving 30 mg of a 1:1 (mass ratio) mixture of $Na_2CO_3$ and $K_2CO_3$ in 20 ml of

pure water, leaving the combusted mixture to stand for 30 minutes, and then measuring the iodine content using a Shimadzu 20A ion chromatograph. A calibration curve of a KI standard solution containing 0.5 mass ppm and 1.0 mass ppm of iodine ions can be used.

The fluorine-containing elastomer preferably contains a $-CH_2I$ structure. Whether the $-CH_2I$ structure is contained can be verified by a $^1$H-NMR spectrum. The fluorine-containing elastomer containing a $-CH_2I$ structure can be obtained by iodine transfer polymerization.

In the fluorine-containing elastomer, the amount of the $-CH_2I$ structure is preferably 0.05 to 1.50 mol% based on 100 mol% of the $-CH_2-$ structure. The amount of the $-CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the $-CH_2I$ structure can be determined by a $^1$H-NMR spectrum.

The fluorine-containing elastomer more preferably contains a $-CF_2CH_2I$ structure. The fluorine-containing elastomer containing the $-CF_2CH_2I$ structure can be obtained by producing a VdF-based fluorine-containing elastomer by iodine transfer polymerization.

In the fluorine-containing elastomer, the amount of the $-CF_2CH_2I$ structure is preferably 0.05 to 1.50 mol% based on 100 mol% of the $-CH_2-$ structure. The amount of the $-CF_2CH_2I$ structure is more preferably 0.08 mol% or more and even more preferably 0.12 mol% or more, and is more preferably 1.20 mol% or less, even more preferably 1.00 mol% or less, and particularly preferably 0.80 mol% or less. The amount of the - $CF_2CH_2I$ structure is calculated by A/B*100 from integrated value A of all peak intensities observed in a chemical shift region of 3.75 to 4.05 ppm derived from $-CH_2I$ and integrated value B of all peak intensities observed in chemical shift regions of 2.3 to 2.7 ppm and 2.9 to 3.75 ppm derived from - $CH_2$- in a $^1$H-NMR spectrum.

A suitable fluorine-containing monomer for use in the production method of the present disclosure may be the fluorine-containing monomer described with respect to the fluorine-containing elastomer.

In the production method of the present disclosure, the use of at least one type of the fluorine-containing compound (A) enables efficient production of the fluorine-containing elastomer. Also, in the production method of the present disclosure, two or more types of fluorine-containing compounds (A) may be used at the same time, or another compound having a surfactant function may also be used in combination insofar as the compound is volatile or is allowed to remain in a formed article containing the fluorine-containing elastomer or the like.

In the production method of the present disclosure, the fluorine-containing monomer is preferably polymerized substantially in the absence of a fluorine-containing surfactant not having a radical polymerizable unsaturated bond (hereinafter, simply referred to as "fluorine-containing surfactant" in some cases).

Conventionally, fluorine-containing surfactants have been used for the polymerization of fluorine-containing monomers, but the production method of the present disclosure allows for, by using the fluorine-containing compound (A), polymerizing a fluorine-containing monomer to obtain a fluorine-containing elastomer even without using the fluorine-containing surfactant.

The expression "substantially in the absence of a fluorine-containing surfactant" as used herein means that the proportion of the fluorine-containing surfactant contained based on the aqueous medium is 10 mass ppm or less, and the fluorine-containing surfactant contained is preferably 1 mass ppm or less, more preferably 100 mass ppb or less, even more preferably 10 mass ppb or less, and particularly preferably 1 mass ppb or less.

Examples of the above fluorine-containing surfactant include an anionic fluorine-containing surfactant.

The above anionic fluorine-containing surfactant may be, for example, a fluorine atom-containing surfactant having, in the portion excluding the anionic group, 20 or less carbon atoms in total.

The fluorine-containing surfactant may also be a fluorine-containing surfactant in which the molecular weight of the anionic moiety is 1,000 or less and preferably 800 or less.

The "anionic moiety" means a portion of the fluorine-containing surfactant excluding the cation. For example, in the case of $F(CF_2)_{n1}COOM$ represented by the formula (I) below, the anionic moiety is the "$F(CF_2)_{n1}COO$" portion.

The fluorine-containing surfactant may also be a fluorine-containing surfactant having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The above Log POW is obtained by performing HPLC on standard substances with known octanol/water partition coefficients (heptanoic acid, octanoic acid, nonanoic acid, and decanoic acid) under the following conditions: column; TOSOH ODS-120T column (φ4.6 mm × 250 mm, Tosoh Corporation), eluent; acetonitrile/0.6 mass% $HClO_4$ water = 1/1 (vol/vol%), flow rate; 1.0 ml/min, sample volume; 300 μL, column temperature; 40°C, detection light; UV 210 nm, preparing a calibration curve between each elution time and the known octanol/water partition coefficients, and calculating from the elution time in HPLC for the sample liquid based on this calibration curve.

Specific examples of the fluorine-containing surfactant include those described in U.S. Patent Application Publication No. 2007/0015864, U.S. Patent Application Publication No. 2007/0015865, U.S. Patent Application Publication

No. 2007/0015866, U.S. Patent Application Publication No. 2007/0276103, U.S. Patent Application Publication No. 2007/0117914, U.S. Patent Application Publication No. 2007/0142541, U.S. Patent Application Publication No. 2008/0015319, U.S. Patent. No. 3250808, U.S. Patent. No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, International Publication No. WO 2013/189826, and the like.

The anionic fluorine-containing surfactant may be a compound represented by the following general formula ($N^0$):

$$X^{n0}\text{-}Rf^{n0}\text{-}Y^0 \qquad (N^0)$$

wherein $X^{n0}$ is H, Cl, or F; $Rf^{n0}$ is a linear, branched, or cyclic alkylene group having 3 to 20 carbon atoms in which some or all of Hs are replaced with F; the alkylene group may contain one or more ether bonds, and some Hs may be replaced with Cl; and Y° is an anionic group.

The anionic group of Y° may be -COOM, $-SO_2M$, or $-SO_3M$, and may be -COOM or $-SO_3M$.

M is H, a metal atom, $NR^7_4$, imidazolium optionally having a substituent, pyridinium optionally having a substituent, or phosphonium optionally having a substituent and $R^7$ is -H or an organic group.

Examples of the above metal atom include alkali metals (Group 1) and alkaline earth metals (Group 2), and it is Na, K, or Li, for example.

$R^7$ may be -H or a $C_{1-10}$ organic group, may be -H or a $C_{1-4}$ organic group, and may be -H or a $C_{1-4}$ alkyl group.

M may be H, a metal atom, or $NR^7_4$, may be H, an alkali metal (Group 1), an alkaline earth metal (Group 2), or $NR^7_4$, and may be H, Na, K, Li, or $NH_4$.

In $Rf^{n0}$, 50% or more of H may be replaced with fluorine.

Examples of the compound represented by general formula ($N^0$) may be a compound represented by the following general formula ($N^1$):

$$X^{n0}\text{-}(CF_2)_{m1}\text{-}Y^0 \qquad (N^1)$$

wherein $X^{n0}$ is H, Cl, or F; m1 is an integer of 3 to 15; and Y° is as defined above;
a compound represented by the following general formula (N2) :

$$Rf^{n1}\text{-}O\text{-}(CF(CF_3)CF_2O)_{m2}CFX^{n1}\text{-}Y^0 \qquad (N^2)$$

wherein $Rf^{n1}$ is a perfluoroalkyl group having 1 to 5 carbon atoms; m2 is an integer of 0 to 3; $X^{n1}$ is F or $CF_3$; and $Y^0$ is as defined above;
a compound represented by the following general formula ($N^3$) :

$$Rf^{n2}(CH_2)_{m3}\text{-}(Rf^{n3})_q\text{-}Y^0 \qquad (N^3)$$

wherein $Rf^{n2}$ is a partially or fully fluorinated alkyl group having 1 to 13 carbon atoms and optionally containing an ether bond and/or a chlorine atom, m3 is an integer of 1 to 3, $Rf^{n3}$ is a linear or branched perfluoroalkylene group having 1 to 3 carbon atoms, q is 0 or 1, and Y° is as defined above);
a compound represented by the following general formula ($N^4$) :

$$Rf^{n4}\text{-}O\text{-}(CY^{n1}Y^{n2})_pCF_2\text{-}Y^0 \qquad (N^4)$$

wherein $Rf^{n4}$ is a partially or fully fluorinated, linear or branched alkyl group having 1 to 12 carbon atoms and optionally containing an ether bond; $Y^{n1}$ and $Y^{n2}$ are the same as or different from each other, and are each H or F; p is 0 or 1; and $Y^0$ is as defined above; and
a compound represented by the following general formula ($N^5$) :

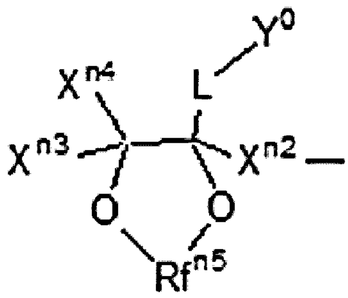

(N 5)

wherein $X^{n2}$, $X^{n3}$, and $X^{n4}$ may be the same or different and are each H, F, or a linear or branched partial or fully fluorinated alkyl group having 1 to 6 carbon atoms and optionally containing an ether bond, $Rf^{n5}$ is a linear or branched partially or fully fluorinated alkylene group having 1 to 3 carbon atoms and optionally containing an ether bond, L is a linking group, and Y° is as defined above, provided that the total number of carbon atoms of $X^{n2}$, $X^{n3}$, $X^{n4}$, and $Rf^{n5}$ is 18 or less.

Specific examples of the compound represented by general formula ($N^0$) include perfluorocarboxylic acid (I) represented by the following general formula (I), ω-H perfluorocarboxylic acid (II) represented by the following general formula (II), perfluoroether carboxylic acid (III) represented by the following general formula (III), perfluoroalkylalkylenecarboxylic acid (IV) represented by the following general formula (IV), perfluoroalkoxyfluorocarboxylic acid (V) represented by the following general formula (V), perfluoroalkylsulfonic acid (VI) represented by the following general formula (VI), ω-H perfluorosulfonic acid (VII) represented by the following general formula (VII), perfluoroalkylalkylene sulfonic acid (VIII) represented by the following general formula (VIII), alkylalkylenecarboxylic acid (IX) represented by the following general formula (IX), fluorocarboxylic acid (X) represented by the following general formula (X), alkoxyfluorosulfonic acid (XI) represented by the following general formula (XI), compound (XII) represented by the following general formula (XII), compound (XIII) represented by the following general formula (XIII), and the like.

The perfluorocarboxylic acid (I) is represented by the following general formula (I):

$F(CF_2)_{n1}COOM$ (I)

wherein n1 is an integer of 3 to 14; M is H, a metal atom, $NR^7_4$, imidazolium optionally having a substituent, pyridinium optionally having a substituent, or phosphonium optionally having a substituent; and $R^7$ is -H or an organic group.

The ω-H perfluorocarboxylic acid (II) is represented by the following general formula (II):

$H(CF_2)_{n2}COOM$ (II)

wherein n2 is an integer of 4 to 15; and M is as defined above.

The perfluoroethercarboxylic acid (III) is represented by the following general formula (III):

$Rf^1\text{-O-}(CF(CF_3)CF_2O)_{n3}CF(CF_3)COOM$ (III)

wherein $Rf^1$ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

$Rf^2(CH_2)_{n4}Rf^3COOM$ (IV)

wherein $Rf^2$ is a perfluoroalkyl group having 1 to 5 carbon atoms; $Rf^3$ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

$Rf^4\text{-O-}CY^1Y^2CF_2\text{-COOM}$ (V)

wherein $Rf^4$ is a linear or branched partially or fully fluorinated alkyl group having 1 to 12 carbon atoms and optionally containing an ether bond and/or a chlorine atom; $Y^1$ and $Y^2$ are the same or different and are each H or F; and M is as defined above.

The perfluoroalkylsulfonic acid (VI) is represented by the following general formula (VI):

$F(CF_2)_{n5}SO_3M$ (VI)

wherein n5 is an integer of 3 to 14, and M is as defined above.

The ω-H perfluorosulfonic acid (VII) is represented by the following general formula (VII):

$H(CF_2)_{n6}SO_3M$ (VII)

wherein n6 is an integer of 4 to 14, and M is as defined above.

The perfluoroalkylalkylenesulfonic acid (VIII) is represented by the following general formula (VIII):

$Rf^5(CH_2)_{n7}SO_3M$ (VIII)

wherein $Rf^5$ is a perfluoroalkyl group having 1 to 13 carbon atoms, n7 is an integer of 1 to 3, and M is as defined above.

The alkylalkylenecarboxylic acid (IX) is represented by the following general formula (IX):

$Rf^6(CH_2)_{n8}COOM$ (IX)

wherein $Rf^6$ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

$Rf^7\text{-O-}Rf^8\text{-O-}CF_2\text{-COOM}$ (X)

wherein $Rf^7$ is a linear or branched, partially or fully fluorinated alkyl group having 1 to 6 carbon atoms and optionally containing an ether bond and/or a chlorine atom, $Rf^8$ is a linear or branched, partially or fully fluorinated alkyl group having 1 to 6 carbon atoms, and M is as defined above.

The alkoxyfluorosulfonic acid (XI) is represented by the following general formula (XI):

$Rf^9\text{-O-}CY^1Y^2CF_2\text{-}SO_3M$ (XI)

wherein $Rf^9$ is a linear or branched partially or fully fluorinated alkyl group having 1 to 12 carbon atoms, optionally containing chlorine, and optionally containing an ether bond, $Y^1$ and $Y^2$ are the same or different and are H or F; and M is as defined above.

The compound (XII) is represented by the following general formula (XII):

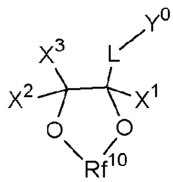

(XII)

wherein $X^1$, $X^2$, and $X^3$ are the same as or different, and each independently are H, F, or a linear or branched, partially or fully fluorinated alkyl group having 1 to 6 carbon atoms and optionally containing an ether bond; $Rf^{10}$ is a perfluoroalkylene group having 1 to 3 carbon atoms; L is a linking group; Y° is an anionic group.

$Y^0$ may be -COOM, $-SO_2M$, or $-SO_3M$, and may be $-SO_3M$ or - COOM, wherein M is as defined above.

Examples of L include a single bond and a partially or fully fluorinated alkylene group having 1 to 10 carbon atoms and optionally containing an ether bond.

The compound (XIII) is represented by the following general formula (XIII):

$Rf^{11}\text{-O-}(CF_2CF(CF_3)O)_{n9}(CF_2O)_{n10}CF_2COOM$ (XIII)

wherein $Rf^{11}$ is a fluoroalkyl group having 1 to 5 carbon atoms and containing chlorine, n9 is an integer of 0 to 3, n10 is

an integer of 0 to 3, and M is as defined above. Examples of the compound (XIII) include $CF_2ClO(CF_2CF(CF_3)O)_{n9}(CF_2O)_{n10}CF_2COONH_4$ (a mixture having an average molecular weight of 750, wherein n9 and n10 are as defined above).

The fluorine-containing surfactant may be one fluorine-containing surfactant, or may be a mixture containing two or more fluorine-containing surfactants.

Examples of the fluorine-containing surfactant include compounds represented by the following formulae. The fluorine-containing surfactant may be a mixture of these compounds. In one embodiment of the polymerization, a fluoromonomer is polymerized substantially in the absence of compounds represented by the following formulas:

$F(CF_2)_7COOM$,

$F(CF_2)_5COOM$,

$H(CF_2)_6COOM$,

$H(CF_2)_7COOM$,

$CF_3O(CF_2)_3OCHFCF_2COOM$,

$C_3F_7OCF(CF_3)CF_2OCF(CF_3)COOM$,

$CF_3CF_2CF_2OCF(CF_3)COOM$,

$CF_3CF_2OCF_2CF_2OCF_2COOM$,

$C_2F_5OCF(CF_3)CF_2OCF(CF_3)COOM$,

$CF_3OCF(CF_3)CF_2OCF(CF_3)COOM$,

$CF_2ClCF_2CF_2OCF(CF_3)CF_2OCF_2COOM$,

$CF_2ClCF_2CF_2OCF_2CF(CF_3)OCF_2COOM$,

$CF_2ClCF(CF_3)OCF(CF_3)CF_2OCF_2COOM$, and

$CF_2ClCF(CF_3)OCF_2CF(CF_3)OCF_2COOM$,

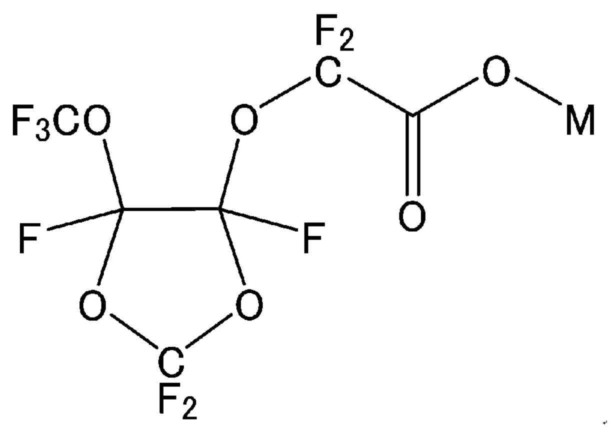

wherein M is H, a metal atom, $NR^7_4$, imidazolium optionally having a substituent, pyridinium optionally having a substituent, or phosphonium optionally having a substituent, and $R^7$ represents H or an organic group.

By the production method of the present disclosure, an aqueous dispersion of a fluorine-containing elastomer is obtained. The resulting aqueous dispersion of a fluorine-containing elastomer preferably has a solid concentration (a fluorine-containing elastomer content) of 10 to 50 mass%, more preferably 15 to 40 mass%, and even more preferably

20 to 30 mass%, when polymerization is complete.

The solid concentration (the fluorine-containing elastomer content) of the aqueous dispersion of the fluorine-containing elastomer can be determined by drying 1 g of the aqueous dispersion under 150°C and 180-minute conditions, measuring the mass of the heating residue, and calculating the proportion of the mass of the heating residue to the mass of the aqueous dispersion.

The aqueous dispersion of the fluorine-containing elastomer may contain fluorine-containing elastomer particles. The average particle size of fluorine-containing elastomer particles is preferably 10 to 800 nm, more preferably 50 to 500 nm, and even more preferably 70 to 300 nm. The average particle size of fluorine-containing elastomer particles is a cumulant average diameter and can be measured by dynamic light scattering.

The number of fluorine-containing elastomer particles contained in the aqueous dispersion of a fluorine-containing elastomer is preferably $1.0\times10^{12}$ particles/cc or more, more preferably $5.0\times10^{12}$ particles/cc or more, even more preferably $1.0\times10^{13}$ particles/cc or more, particularly preferably $1.2\times10^{14}$ particles/cc or more, and most preferably $1.3\times10^{14}$ particles/cc or more. The number of particles (the number of polymer particles) can be calculated in accordance with the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} \Big/ \left\{\frac{4}{3}\times 3.14\times\left(\frac{\text{Average particle size (nm)}}{2}\times 10^{-9}\right)^3\times \text{Specific gravity}\times 10^6\right\}$$

The number of fluorine-containing elastomer particles obtained by the expression is the number of particles per 1 cc of water. The specific gravity is the specific gravity of the fluorine-containing elastomer. The specific gravity of the fluorine-containing elastomer can be determined in accordance with JIS Z 8807:2012.

A treatment such as coagulation or heating may be performed on the aqueous dispersion of a fluorine-containing elastomer.

Coagulation can be carried out by adding an alkaline earth or earth metal salt to the aqueous dispersion. Examples of the alkaline earth or earth metal salt include a sulfuric acid salt, a nitric acid salt, a hydrochloric acid salt, and an acetic acid salt of calcium, magnesium, and aluminum.

The coagulated fluorine-containing elastomer may be washed with water to remove a small amount of impurities such as a buffer and a salt present in the fluorine-containing elastomer, and then the washed fluorine-containing elastomer may be dried. The drying temperature is preferably 40 to 200°C, more preferably 60 to 180°C, and even more preferably 80 to 150°C.

The form of the fluorine-containing elastomer obtained after coagulation is not limited, and may be gum, crumb, powder, pellet, or the like, and is preferably gum or crumb. Gum is a small mass of particles made of the fluorine-containing elastomer, and crumb is in the form of an amorphous mass as a result of the fluorine-containing elastomer being unable to maintain a small particulate form as a gum at room temperature and fusing to each other. Gum or crumb is suitably obtained by coagulation, drying, or the like by a conventionally known method from the aqueous dispersion obtained by the production method of the present disclosure.

A fluorine-containing elastomer composition can be produced by adding a cross-linking agent and the like to the aqueous dispersion of a fluorine-containing elastomer obtained by the production method of the present disclosure or the fluorine-containing elastomer. The type and the amount of the cross-linking agent are not limited, and the cross-linking agent can be used within a known range.

When the fluorine-containing elastomer is an uncrosslinked elastomer, example of the crosslinking system therefor include a peroxide crosslinking system, a polyol crosslinking system, or a polyamine crosslinking system, and the crosslinking system is preferably at least one selected from the group consisting of a peroxide crosslinking system and a polyol crosslinking system. From the viewpoint of chemical resistance, a peroxide crosslinking system is preferable, and from the viewpoint of heat resistance, a polyol crosslinking system is preferable.

Accordingly, the cross-linking agent is preferably at least one cross-linking agent selected from the group consisting of a polyol cross-linking agent and a peroxide cross-linking agent, and more preferably a peroxide cross-linking agent.

The amount of the cross-linking agent contained is suitably selected according to the type of the cross-linking agent and the like, and is preferably 0.2 to 6.0 parts by mass and more preferably 0.3 to 5.0 parts by mass based on 100 parts by mass of the fluorine-containing elastomer.

Peroxide crosslinking can be carried out by using an uncrosslinked elastomer capable of peroxide crosslinking as a fluorine-containing elastomer and an organic peroxide as a cross-linking agent.

The uncrosslinked elastomer capable of peroxide crosslinking is not limited, and may be an uncrosslinked elastomer having a site capable of peroxide crosslinking. The site capable of peroxide crosslinking is not limited, and examples include a site having an iodine atom and a site having a bromine atom.

The organic peroxide may be an organic peroxide capable of readily producing peroxy radicals in the presence of heat and a redox system, and examples include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha$,$\alpha$-bis(t-butylperoxy)-p-diisopropylbenzene, 2,5-dimethyl-2,5-di(t-butylperoxy)hexane, 2,5-dimethyl-2,5-di(t-butylperoxy)-hexyne-3, benzoyl peroxide, t-butyl peroxybenzene, t-butyl peroxymaleate, t-butyl peroxyisopropyl carbonate, and t-butyl peroxybenzoate. Among these, 2,5-dimethyl-2,5-di(t-butylperoxy)hexane and 2,5-dimethyl-2,5-di(t-butylperoxy)-hexyne-3 are preferable.

The amount of the organic peroxide contained is preferably 0.1 to 15 parts by mass and more preferably 0.3 to 5 parts by mass based on 100 parts by mass of the fluorine-containing elastomer.

When the cross-linking agent is an organic peroxide, the fluorine-containing elastomer composition preferably further contains a cross-linking aid. Examples of the cross-linking aid include triallyl cyanurate, triallyl isocyanurate (TAIC), triacrylformal, triallyl trimellitate, N,N'-m-phenylene bismaleimide, dipropagil terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene)cyanurate, triallyl phosphite, and trimethallyl isocyanurate. Among these, triallyl isocyanurate (TAIC) is preferable in terms of excellent crosslinkability, mechanical properties, and flexibility.

The amount of the cross-linking aid contained is preferably 0.01 to 10 parts by mass, more preferably 0.01 to 7.0 parts by mass, and even more preferably 0.1 to 5.0 parts by mass based on 100 parts by mass of the fluorine-containing elastomer. An amount of the cross-linking aid of less than 0.01 parts by mass results in poor mechanical properties and poor flexibility. An amount exceeding 10 parts by mass tends to result in inferior heat resistance and also poor durability of a formed article.

Polyol crosslinking can be carried out by using an uncrosslinked elastomer capable of polyol crosslinking as a fluorine-containing elastomer and a polyhydroxy compound as a cross-linking agent. In the polyol crosslinking system, the amount of the polyhydroxy compound contained is preferably 0.01 to 10 parts by mass based on 100 parts by mass of the uncrosslinked elastomer capable of polyol crosslinking. When the amount of the polyhydroxy compound contained is in such a range, polyol crosslinking can be sufficiently promoted. The amount is more preferably 0.02 to 8 parts by mass. The amount is even more preferably 0.03 to 4 parts by mass.

The uncrosslinked elastomer capable of polyol crosslinking is not limited, and is an uncrosslinked elastomer having a site capable of polyol crosslinking. The site capable of polyol crosslinking is not limited, and may be, for example, a site having a vinylidene fluoride (VdF) unit. The method for introducing the crosslinking site may be a method involving copolymerizing a monomer that provides a crosslinking site at the time of polymerization of an uncrosslinked elastomer.

A suitable polyhydroxy compound may be a polyhydroxy aromatic compound in terms of excellent heat resistance.

The polyhydroxy aromatic compound is not limited, and examples include 2,2-bis(4-hydroxyphenyl)propane (hereinafter referred to as bisphenol A), 2,2-bis(4-hydroxyphenyl)perfluoropropane (hereafter referred to as bisphenol AF, and bisphenol AF is available from, for example, FUJIFILM Wako Pure Chemical Corporation or Central Glass Co., Ltd.), 1,3-dihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter referred to as bisphenol B), 4,4-bis(4-hydroxyphenyl)valeric acid, 2,2-bis(4-hydroxyphenyl)tetrafluorodichloropropane, 4,4'-dihydroxydiphenyl sulfone, 4,4'-dihydroxydiphenylketone, tri(4-hydroxyphenyl)methane, 3,3',5,5'-tetrachlorobisphenol A, and 3,3',5,5'-tetrabromobisphenol A. These polyhydroxy aromatic compounds may be alkali metal salts, alkaline earth metal salts, and the like, and when the copolymer is coagulated with acid, the metal salts are preferably not used. The amount of the polyhydroxy aromatic compound contained is 0.1 to 15 parts by mass and preferably 0.5 to 5 parts by mass based on 100 parts by mass of the uncrosslinked elastomer.

When the cross-linking agent is a polyhydroxy compound, the fluorine-containing elastomer composition preferably further contains a crosslinking accelerator. The crosslinking accelerator promotes formation of an intramolecular double bond in the dehydrofluorination reaction of the polymer main chain and addition of a polyhydroxy compound to the formed double bond.

The crosslinking accelerator may be used in combination with an acid acceptor such as magnesium oxide or with a cross-linking aid.

Examples of the crosslinking accelerator include onium compounds, and among onium compounds, the crosslinking accelerator is preferably at least one selected from the group consisting of ammonium compounds such as a quaternary ammonium salt, phosphonium compounds such as a quaternary phosphonium salt, oxonium compounds, sulfonium compounds, cyclic amines, and monofunctional amine compounds, and more preferably at least one selected

from the group consisting of quaternary ammonium salts and quaternary phosphonium salts.

The quaternary ammonium salt is not limited, and examples include 8-methyl-1,8-diazabicyclo[5,4,0]-7-undecenium chloride, 8-methyl-1,8-diazabicyclo[5,4,0]-7-undecenium iodide, 8-methyl-1,8-diazabicyclo[5,4,0] -7-undecenium hydroxide, 8-methyl-1,8-diazabicyclo[5,4,0]-7-undecenium methyl sulfate, 8-ethyl-1,8-diazabicyclo[5,4,0]-7-undecenium bromide, 8-propyl-1,8-diazabicyclo[5,4,0]-7-undecenium bromide, 8-dodecyl-1,8-diazabicyclo[5,4,0]-7-undecenium chloride, 8-dodecyl-1,8-diazabicyclo[5,4,0]-7-undecenium hydroxide, 8-eicosyl-1,8-diazabicyclo[5,4,0]-7-undecenium chloride, 8-tetracosyl-1,8-diazabicyclo[5,4,0]-7-undecenium chloride, 8-benzyl-1,8-diazabicyclo[5,4,0]-7-undecenium chloride (hereinafter referred to as DBU-B, and DBU-B is available from, for example, FUJIFILM Wako Pure Chemical Corporation), 8-benzyl-1,8-diazabicyclo[5,4,0]-7-undecenium hydroxide, 8-phenethyl-1,8-diazabicyclo[5,4,0]-7-undecenium chloride, 8-(3-phenylpropyl)-1,8-diazabicyclo[5,4,0]-7-undecenium chloride, tetrabutylammonium hydrogensulfate, tetrabutylammonium hydroxide, tetrabutylammonium chloride, and tetrabutylammonium bromide. Among these, DBU-B is preferable in terms of crosslinkability, mechanical properties, and flexibility.

The quaternary phosphonium salt is not limited, and examples include tetrabutylphosphonium chloride, benzyltriphenylphosphonium chloride (hereinafter referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride, and among these, benzyltriphenylphosphonium chloride (BTPPC) is preferable in terms of crosslinkability, mechanical properties, and flexibility.

The crosslinking accelerator may be a solid solution of a quaternary ammonium salt and bisphenol AF, a solid solution of a quaternary phosphonium salt and bisphenol AF, or a chlorine-free crosslinking accelerator disclosed in Japanese Patent Laid-Open No. 11-147891.

The amount of the crosslinking accelerator contained is preferably 0.01 to 8.00 parts by mass and more preferably 0.02 to 5.00 parts by mass based on 100 parts by mass of the uncrosslinked elastomer. The amount is even more preferably 0.03 to 3.00 parts by mass. When the amount of the crosslinking accelerator is less than 0.01 parts by mass, there is a possibly that the crosslinking of the uncrosslinked elastomer does not sufficiently progress, and the resulting formed article has poor heat resistance and the like. When the amount exceeds 8.00 parts by mass, there is a possibility that the fluorine-containing elastomer composition has poor forming processability, and there is a tendency that elongation with respect to mechanical properties is reduced, and flexibility is also reduced.

The acid acceptor is used to neutralize an acidic substance produced during polyol crosslinking, and specific examples include magnesium oxide, calcium hydroxide (such as NICC 5000 (manufactured by Inoue Calcium Corporation), CALDIC #2000, CALDIC #1000 (manufactured by Ohmi Chemical Industry Co., Ltd.)), calcium oxide, litharge (lead oxide), zinc oxide, dibasic lead phosphite, and hydrotalcite, and the acid acceptor is preferably at least one selected from the group consisting of high-activity magnesium oxide and low-activity magnesium.

Polyamine crosslinking can be carried out by using a fluorine-containing elastomer capable of polyamine crosslinking as a fluorine-containing elastomer and a polyamine compound as a cross-linking agent.

The fluorine-containing elastomer capable of polyamine crosslinking is not limited, and is a fluorine-containing elastomer having a site capable of polyamine crosslinking. The site capable of polyamine crosslinking is not limited, and may be, for example, a site having a vinylidene fluoride (VdF) unit. The method for introducing the crosslinking site may be a method involving copolymerizing a monomer that provides a crosslinking site at the time of polymerization of a fluorine-containing elastomer.

Examples of the polyamine compound include hexamethylenediamine carbamate, N,N'-dicinnamylidene-1,6-hexamethylenediamine, and 4,4'-bis(aminocyclohexyl)methane carbamate. Among these, N,N'-dicinnamylidene-1,6-hexamethylenediamine is preferable.

The method for obtaining the fluorine-containing elastomer composition is not limited as long as the method is capable of uniformly mixing the fluorine-containing elastomer obtained by the production method of the present disclosure with a cross-linking agent and the like. An example may be a method involving kneading a powder obtained by coagulating the fluorine-containing elastomer alone and, if necessary, another additive or a compounding agent with a kneader such as an open roll.

The fluorine-containing elastomer composition may contain at least one polyfunctional compound. The polyfunctional compound is a compound having two or more functional groups having the same or different structures within one molecule. The functional group contained in the polyfunctional compound may be a functional group generally known to have reactivity, such as a carbonyl group, a carboxyl group, a haloformyl group, an amide group, an olefin group, an amino group, an isocyanate group, a hydroxy group, and an epoxy group.

With the fluorine-containing elastomer composition, usual additives that are compounded with elastomers, if necessary, for example, various additives such as fillers (carbon black, barium sulfate, and the like), processing aids (waxes and the like), plasticizers, coloring agents, stabilizers, stickiness imparting agents (coumarone resin, coumarone-indene resin, and the like), mold release agents, electric conductivity imparting agents, thermal conductivity imparting agents, surface non-stickiness agents, flexibility imparting agents, heat resistance improving agents, and flame retarders can be further compounded, and one or more types of ordinary cross-linking agents or crosslinking accelerators different

from those described above may also be compounded.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the fluorine-containing elastomer.

The content of the processing aid such as wax is preferably 0 to 10 parts by mass and more preferably 0 to 5 parts by mass based on 100 parts by mass of the fluorine-containing elastomer. When a processing aid, a plasticizer, and a mold release agent are used, the mechanical properties and the sealability of the resulting formed article are tend to be impaired, and thus the contents thereof need to be regulated such that the characteristics of the intended formed article to be obtained are acceptable.

The formed article can be obtained by crosslinking the fluorine-containing elastomer composition. The formed article can also be obtained by forming and crosslinking the fluorine-containing elastomer composition. The fluorine-containing elastomer composition can be formed by a conventionally known method. The forming and crosslinking methods and conditions may be within the scope of known methods and conditions of the adopted forming and crosslinking. The order of forming and crosslinking is not limited, and the composition may be formed and then crosslinked, may be crosslinked and then formed, or simultaneously formed and crosslinked.

Examples of the forming method include, but are not limited to, compression forming, casting, injection molding, extrusion forming, and forming involving a rotocure. The crosslinking method adopted may be a steam crosslinking method, a heating crosslinking method, a radiation crosslinking method, or the like; among these, the steam crosslinking method and the heating crosslinking method are preferable. Non-limiting specific crosslinking conditions may be determined as appropriate in accordance with the types of crosslinking accelerator, cross-linking agent, acid acceptor, and others, usually within a temperature range of 140 to 250°C and a crosslinking time of 1 minute to 24 hours.

By heating the resulting formed article with an oven or the like, mechanical properties and high-temperature compression set properties can be improved. Non-limiting specific crosslinking conditions may be determined as appropriate in accordance with the types of crosslinking accelerator, cross-linking agent, acid acceptor, and others, usually within a temperature range of 140 to 300°C and a range of 30 minutes to 72 hours.

The resulting formed article can be used as various components in various fields such as automobile industry, aircraft industry, and semiconductor industry. The formed article can be used in the same applications as the crosslinked rubber formed articles described in Japanese Patent Laid-Open No. 2013-216915 and the fluoroelastomer formed articles described in Japanese Patent Laid-Open No. 2019-94430, such as sealing materials, sliding members, and non-stick members.

Examples of the usage of the formed article include various sealing materials and packings, such as rings, packings, gaskets, diaphragms, oil seals, and bearing seals. The formed article as a sealing material can be used in applications where excellent non-stickiness and low-friction properties are required. In particular, the formed article can be suitably used in various sealing materials in the automobile industry and the like.

Also, the formed article can be used as a tube, a hose, a roll, various types of rubber roll, a flexible joint, a rubber plate, a coating, a belt, a damper, a valve, a valve seat, a valve body, a chemical resistant coating material, a laminating material, a lining material, and the like.

While embodiments have been described above, it will be understood that various changes in form and detail can be made without departing from the gist and scope of the claims.

## EXAMPLES

Next, embodiments of the present disclosure will now be described by way of Examples, but the present disclosure is not limited only to the Examples.

Various numerical values in the Examples were measured by the following methods.

### Solid concentration of aqueous dispersion

One gram of an aqueous dispersion was dried in an air dryer under 150°C and 180-minute conditions, and the mass of the heating residue was measured to determine the proportion (mass%) of the mass of the heating residue to the mass (1 g) of the aqueous dispersion.

### Copolymerization composition

The copolymerization composition was determined by NMR analysis.

Polymer adhesion rate

The ratio (adhesion rate to a polymerization tank) of the mass of polymer deposits adhering to the polymerization tank after completion of polymerization to the total amount of a polymer (fluorine-containing elastomer) after completion of polymerization was determined by the following formula.

Polymer adhesion rate (mass%) = Mass of polymer deposits / Mass of resulting polymer (including polymer deposits) × 100

Mass of resulting polymer = Mass of aqueous dispersion × Solid concentration (mass%) of aqueous dispersion / 100 + Mass of polymer deposits

Polymer deposits include a polymer adhering to the inside of the polymerization tank such as the inner wall of the polymerization tank and a stirring blade after an aqueous dispersion is removed from the polymerization tank after completion of polymerization, and a polymer that is freed from the aqueous dispersion due to aggregation and is floating or precipitated without being dispersed in the aqueous dispersion. The mass of polymer deposits is the mass after water contained in the polymer deposits is dried and removed at 120°C.

Number of particles (number of fluorine-containing elastomer particles in aqueous dispersion)

The number of particles was calculated by the following expression:

$$\text{Number of polymer particles} = \left\{\frac{\text{Solid concentration of aqueous dispersion (mass\%)}}{100 - \textit{Solid concentration of aqueous dispersion (mass\%)}}\right\} / \left\{\frac{4}{3} \times 3.14 \times \left(\frac{\text{Average particle size (nm)}}{2} \times 10^{-9}\right)^3 \times \text{Specific gravity} \times 10^6\right\}$$

Wherein the average particle size is the average particle size (cumulant average diameter) of fluorine-containing elastomer particles in an aqueous dispersion and is calculated by a cumulant method after measurement is carried out by dynamic light scattering using ELSZ-1000S (manufactured by Otsuka Electronics Co., Ltd.).

wherein the number of polymer particles (the number of fluorine-containing elastomer particles) is the number of particles per 1 cc of water, with the specific gravity of all fluorine-containing elastomers in the Examples and Comparative Examples being 1.8.

Mooney viscosity (ML 1+10 (100°C))

The Mooney viscosity was measured at 100°C in accordance with JIS K 6300-1.2013 using a Mooney viscometer MV 2000E manufactured by ALPHA TECHNOLOGIES.

Maximum torque level (MH)

Concerning the fluorine-containing elastomer compositions prepared in the Examples and Comparative Examples, a crosslinking curve was determined using a rubber vulcanization tester MDRH2030 (manufactured by M&K Co., Ltd.) at the time of crosslinking at 160°C, and the maximum torque level (MH) was determined.

Compression set (CS)

The compression sets of O rings prepared in the Examples and Comparative Examples were measured under conditions of 200°C, 72 hours, and a compressibility of 25% in accordance with JIS K 6262.

Example 1

(Production of aqueous dispersion of fluorine-containing elastomer)

First, 1,500 g of deionized water and 1.50 g of a 10 mass% aqueous solution of $CH_2=CFCF_2OCF(CF_3)COONH_4$ (compound (a1)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was introduced under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Then, 3.0 hours after the initiation of polymerization, an aqueous polymerization initiator solution of 0.026 g of APS was introduced under pressure of nitrogen gas.

A total of 3.00 g of the 10 mass% aqueous solution of $CH_2=CFCF_2OCF(CF_3)COONH_4$ (compound (a1)) was intermittently fed to the polymerization tank immediately after introduction of the diiodine compound $I(CF_2)_4I$ under pressure until 70% of the total feed amount of the mixed monomer was fed.

Then, 5.30 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

Example 2

(Production of aqueous dispersion of fluorine-containing elastomer)

First, 1,500 g of deionized water and 0.93 g of a 10 mass% aqueous solution of $CH_2=CFCF_2OCF(CF_3)COONH_4$ (compound (a1)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was introduced under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Each time at 3.0 hours and 6.0 hours after starting the polymerization, an aqueous polymerization initiator solution of 0.026 g of APS was introduced under pressure of nitrogen gas.

A total of 2.81 g of the 10 mass% aqueous solution of $CH_2=CFCF_2OCF(CF_3)COONH_4$ (compound (a1)) was intermittently fed to the polymerization tank immediately after introduction of the diiodine compound $I(CF_2)_4I$ under pressure until 70% of the total feed amount of the mixed monomer was fed.

Then, 6.32 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

Example 3

(Production of aqueous dispersion of fluorine-containing elastomer)

First, 1,500 g of deionized water and 0.93 g of a 10 mass% aqueous solution of $CH_2=CFCF_2OCF(CF_3)COONH_4$ (compound (a1)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was introduced under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Then, 3.0 hours after the initiation of polymerization, an aqueous polymerization initiator solution of 0.026 g of APS was introduced under pressure of nitrogen gas.

A total of 3.00 g of the 10 mass% aqueous solution of $CF_2=CFOCF_2CF_2COONH_4$ (compound (a2)) was intermittently fed to the polymerization tank immediately after introduction of the diiodine compound $I(CF_2)_4I$ under pressure until 70% of the total feed amount of the mixed monomer was fed.

Then, 5.72 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

Example 4

(Production of aqueous dispersion of fluorine-containing elastomer)

First, 1,500 g of deionized water and 0.93 g of a 10 mass% aqueous solution of $CH_2=CFCF_2OCF(CF_3)COONH_4$ (compound (a1)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was fed under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Then, 3.0 hours after the initiation of polymerization, an aqueous polymerization initiator solution of 0.026 g of APS was introduced under pressure of nitrogen gas.

A total of 3.00 g of the 10 mass% aqueous solution of $CF_2=CFOCF_2CF_2SO_3Na$ (compound (a3)) was intermittently fed to the polymerization tank immediately after introduction of the diiodine compound $I(CF_2)_4I$ under pressure until 70% of the total feed amount of the mixed monomer was fed.

Then, 5.82 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The

solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

Comparative Example 1

(Production of aqueous dispersion of fluorine-containing elastomer)

First, 1,500 g of deionized water and 3.00 g of a 5 mass% aqueous solution of $CH_2=CFCF_2OCF(CF_3)CF_2OCF(CF_3)COONH_4$ (compound (b)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was introduced under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Each time at 3.0 hours and 6.0 hours after starting the polymerization, an aqueous polymerization initiator solution of 0.026 g of APS was introduced under pressure of nitrogen gas.

A total of 6.00 g of the 5 mass% aqueous solution of $CH_2=CFCF_2OCF(CF_3)CF_2OCF(CF_3)COONH_4$ (compound (b)) was continuously fed to the polymerization tank immediately after introduction of the diiodine compound $I(CF_2)_4I$ under pressure until 70% of the total feed amount of the mixed monomer was fed.

Then, 6.93 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

Comparative Example 2

(Production of aqueous dispersion of fluorine-containing elastomer)

First, 1,500 g of deionized water and 0.93 g of a 10 mass% aqueous solution of $CH_2=CFCF_2OCF(CF_3)COONH_4$ (compound (a1)) were added to a stainless steel polymerization tank having an internal volume of 3 L, the polymerization tank was hermetically sealed, and the system was purged with nitrogen to remove oxygen. The polymerization tank was heated to 80°C, and VdF, TFE, and HFP (initial monomers) were introduced under pressure so as to attain a molar ratio of vinylidene fluoride [VdF]/tetrafluoroethylene [TFE]/hexafluoropropylene [HFP] (= 19/11/70 mol%) and an inner pressure of the polymerization tank of 1.47 MPaG while being stirred.

Then, an aqueous polymerization initiator solution prepared by dissolving 0.026 g of ammonium persulfate (APS) in deionized water was introduced under pressure of nitrogen gas to initiate the polymerization. At the point when the internal pressure dropped to 1.45 MPaG as the polymerization progressed, a mixed monomer consisting of VDF/TFE/HFP (= 50/20/30 mol%) was charged until the internal pressure was kept constant at 1.47 MPaG.

When 14 g of the mixed monomer was added, 2.19 g of a diiodine compound $I(CF_2)_4I$ was introduced under pressure of nitrogen gas.

Then, 3.0 hours after the initiation of polymerization, an aqueous polymerization initiator solution of 0.026 g of APS was introduced under pressure of nitrogen gas.

Then, 5.52 hours after the initiation of polymerization, stirring was stopped, decompression was carried out until the polymerization tank reached atmospheric pressure, and the polymerization was terminated.

An aqueous dispersion of a fluorine-containing elastomer was obtained by cooling the polymerization tank. The solid concentration of the aqueous dispersion, the polymer adhesion rate, and the number of particles are shown in Table 1.

An aqueous aluminum sulfate solution was added to the resulting aqueous dispersion of a fluorine-containing elastomer to carry out coagulation. The resulting coagulated product was washed with water and dried to give a fluorine-containing elastomer. The copolymer composition examined by NMR analysis was VdF/TFE/HFP = 50/20/30 (mol%). The Mooney viscosity of the fluorine-containing elastomer is shown in Table 1.

(Preparation of O ring)

100 parts by mass of the fluorine-containing elastomer obtained in the Examples and Comparative Examples, 20 parts by mass of carbon black (MT carbon, Thermax N-990, manufactured by Cancarb Limited), 4 parts by mass of triallyl isocyanurate (TAIC, manufactured by Nihon Kasei Co., LTD.) and 1.5 parts by mass of 2,5-dimethyl-2,5-di(t-butylperoxy)hexane (PERHEXA 25B, manufactured by NOF CORPORATION) were kneaded using an open roll to prepare a fluorine-containing elastomer composition. The maximum torque level (MH) of the fluorine-containing elastomer composition is shown in Table 1.

An O ring (P24 size) was prepared by press-crosslinking the resulting fluorine-containing elastomer composition at 160°C for 10 minutes and oven-crosslinking the fluorine-containing elastomer composition at 180°C for 4 hours. The compression set (CS) of the O ring is shown in Table 1.

[Table 1]

Table 1

| | | Example 1 | Example 2 | Example 3 | Example 4 | Comparative Example 1 | Comparative Example 2 |
|---|---|---|---|---|---|---|---|
| Fluorine-containing compound (A) | | | | | | | |
| | Compound fed before initiation of polymerization | Compound (a1) | Compound (a1) | Compound (a1) | Compound (a1) | Compound (b) | Compound (a1) |
| | Compound fed after initiation of polymerization | Compound (a1) | Compound (a1) | Compound (a2) | Compound (a3) | Compound (b) | |
| | Feed amount before initiation of polymerization (ppm/water) | 100 | 62 | 62 | 62 | 100 | 62 |
| | Continuous feed amount after initiation of polymerization (ppm/water) | 200 | 187 | 200 | 200 | 200 | |
| | Total feed amount (ppm/water) | 300 | 249 | 262 | 262 | 300 | 62 |
| Polymerization conditions | | | | | | | |
| | Reaction time (hour) | 5.30 | 6.32 | 5.72 | 5.82 | 6.93 | 5.52 |
| Result | | | | | | | |
| | Sold concentration (% by mass) | 23.4 | 22.6 | 22.9 | 22.7 | 22.7 | 21.0 |
| | Polymer adhesion rate (% by mass) | 0.40 | 0.65 | 0.66 | 0.64 | 159 | 10.19 |
| | Number of particles (particles/g) | $1.11 \times 10^{14}$ | $1.49 \times 10^{14}$ | $1.44 \times 10^{14}$ | $1.45 \times 10^{14}$ | $1.11 \times 10^{14}$ | $1.17 \times 10^{14}$ |
| | Mooney viscosity (ML 1+10 (100°C)) | 64.7 | 61.0 | 61.5 | 68.4 | 64.2 | 66.7 |
| | Maximum torque level (dNm) | 26.9 | 26.6 | 27.7 | | 26.2 | 27.3 |
| | Compression set (%) | 29 | 21 | 22 | | 21 | 20 |
| "-" in the table indicates "not measured." | | | | | | | |

## Claims

1. A method for producing an aqueous dispersion of a fluorine-containing elastomer, comprising polymerizing a fluorine-containing monomer in the presence of an aqueous medium and a fluorine-containing compound (A), to produce an aqueous dispersion containing a fluorine-containing elastomer,

   wherein the fluorine-containing elastomer contains a methylene group in a main chain,
   the fluorine-containing compound (A) is a compound represented by general formula (A):

   $$CX^iX^k=CX^jR^a-(CZ^1Z^2)_k-Y^3 \qquad (A)$$

   wherein $X^i$, $X^j$, and $X^k$ are the same or different and are F, Cl, H, or $CF_3$; $Y^3$ is a hydrophilic group; $R^a$ is a linking group; $Z^1$ and $Z^2$ are the same or different and are H, F, or $CF_3$; and k is 0 or 1; provided that at least one of $X^i$, $X^k$, $X^j$, $R^a$, $Z^1$, and $Z^2$ comprises F; and the number of carbon atoms in a portion excluding the hydrophilic group is 6 or less, and
   the fluorine-containing compound (A) is fed after polymerization of the fluorine-containing monomer is initiated.

2. The production method according to claim 1, wherein the hydrophilic group is $-NH_2$, $-P(O)(OM)_2$, $-OP(O)(OM)_2$, $-SO_3M$, $-OSO_3M$, or -COOM, wherein M is H, a metal atom, $NR^7_4$, imidazolium optionally having a substituent, pyridinium optionally having a substituent, or phosphonium optionally having a substituent; and $R^7$ is H or an organic group and are the same as or different from one another, and any two are optionally bonded to each other to form a ring.

3. The production method according to claim 1 or 2, wherein the fluorine-containing elastomer contains vinylidene fluoride unit.

4. The production method according to any one of claims 1 to 3, wherein the fluorine-containing elastomer contains 50 mol% or more of vinylidene fluoride unit based on all monomer units.

5. The production method according to any one of claims 1 to 4, wherein the fluorine-containing compound (A) is also fed before the initiation of polymerization of the fluorine-containing monomer.

6. The production method according to any one of claims 1 to 5, wherein a feed amount of the fluorine-containing compound (A) that is fed after the polymerization of the fluorine-containing monomer is initiated is 30 to 300 mass ppm based on the aqueous medium.

7. The production method according to any one of claims 1 to 6, wherein the fluorine-containing monomer is polymerized substantially in the absence of a fluorine-containing surfactant not having a radical polymerizable unsaturated bond.

8. The production method according to any one of claims 1 to 7, wherein the fluorine-containing elastomer has a Mooney viscosity (ML1 + 10 (100°C)) of 10 to 130.

9. The production method according to any one of claims 1 to 8, wherein the fluorine-containing compound (A) is at least one selected from the group consisting of a compound represented by general formula (A1):

   $$CX^iX^k=CX^j-O-R-(CZ^1Z^2)_k-Y^3$$

   wherein $X^i$, $X^j$, $X^k$, $Z^1$, $Z^2$, k, and $Y^3$ are as described above; R is a fluorinated alkylene group or fluorinated oxyalkylene group having 1 to 3 carbon atoms; and a compound represented by general formula (A2):

   $$CX^iX^k=CX^j-CZ^1Z^2-O-R-(CZ^1Z^2)_k-Y^3$$

   wherein $X^i$, $X^j$, $X^k$, $Z^1$, $Z^2$, k, and $Y^3$ are as described above; R is a fluorinated alkylene group or fluorinated oxyalkylene group having 1 or 2 carbon atoms.

## INTERNATIONAL SEARCH REPORT

International application No.
**PCT/JP2022/023335**

**A. CLASSIFICATION OF SUBJECT MATTER**

***C08F 2/24***(2006.01)i; ***C08F 214/22***(2006.01)i; ***C08F 216/14***(2006.01)i
FI: C08F2/24 A; C08F214/22; C08F216/14

According to International Patent Classification (IPC) or to both national classification and IPC

**B. FIELDS SEARCHED**

Minimum documentation searched (classification system followed by classification symbols)

C08F2/00-2/60; 6/00-246/00; 301/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2016-515662 A (SOLVAY SPECIALTY POLYMERS ITALY S. P. A.) 30 May 2016 (2016-05-30)<br>entire text | 1-9 |
| A | JP 2002-514181 A (E. I. DU PONT DE NEMOURS AND CO.) 14 May 2002 (2002-05-14)<br>entire text | 1-9 |
| A | WO 2009/119487 A1 (DAIKIN INDUSTRIES, LTD.) 01 October 2009 (2009-10-01)<br>entire text | 1-9 |
| A | JP 61-033848 B2 (ASAHI GLASS CO., LTD.) 05 August 1986 (1986-08-05)<br>entire text | 1-9 |
| A | JP 2015-537106 A (3M INNOVATIVE PROPERTIES CO.) 24 December 2015 (2015-12-24)<br>entire text | 1-9 |
| A | JP 2005-002188 A (KABUSHIKI KAISHA TOYOTA CHUO KENKYUSHO) 06 January 2005 (2005-01-06)<br>entire text | 1-9 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/023335**

**C. DOCUMENTS CONSIDERED TO BE RELEVANT**

| Category* | Citation of document, with indication, where appropriate, of the relevant passages | Relevant to claim No. |
|---|---|---|
| A | CN 112500518 A (FUJIN (SHANGHAI) NEW MATERIALS CO., LTD.) 16 March 2021 (2021-03-16) entire text | 1-9 |

Form PCT/ISA/210 (second sheet) (January 2015)

**INTERNATIONAL SEARCH REPORT**
**Information on patent family members**

International application No.
**PCT/JP2022/023335**

| Patent document cited in search report | Publication date (day/month/year) | Patent family member(s) | Publication date (day/month/year) |
|---|---|---|---|
| JP 2016-515662 A | 30 May 2016 | US 2016/0090429 A1<br>entire text<br>WO 2014/173782 A1<br>EP 2989131 A1 | |
| JP 2002-514181 A | 14 May 2002 | US 5969067 A<br>entire text<br>US 6177196 B1<br>WO 1998/011114 A1<br>EP 927185 A1<br>CN 1230189 A<br>CN 1427014 A | |
| WO 2009/119487 A1 | 01 October 2009 | (Family: none) | |
| JP 61-033848 B2 | 05 August 1986 | (Family: none) | |
| JP 2015-537106 A | 24 December 2015 | US 2015/0291714 A1<br>entire text<br>WO 2014/088804 A1<br>EP 2928931 A1 | |
| JP 2005-002188 A | 06 January 2005 | US 2005/0004335 A1<br>entire text | |
| CN 112500518 A | 16 March 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007045970 A
- JP 53003495 A
- US 20070015864
- US 20070015865
- US 20070015866
- US 20070276103
- US 20070117914
- US 20070142541
- US 20080015319
- US 3250808 A
- US 3271341 A
- JP 2003119204 A
- WO 2005042593 A
- WO 2008060461 A
- WO 2007046377 A
- JP 2007119526 A
- WO 2007046482 A
- WO 2007046345 A
- US 20140228531
- WO 2013189824 A
- WO 2013189826 A
- JP 11147891 A
- JP 2013216915 A
- JP 2019094430 A


### Non-patent literature cited in the description


- **KOBUNSHI RONBUNSHU.** *Japanese Journal of Polymer Science and Technology,* October 1992, vol. 49 (10), 765-783